(19) Europäisches Patentamt / European Patent Office / Office européen des brevets

(11) **EP 2 916 149 B1**

(12) **EUROPEAN PATENT SPECIFICATION**

(45) Date of publication and mention
of the grant of the patent:
**19.07.2017 Bulletin 2017/29**

(51) Int Cl.:
***G02B 3/00*** *(2006.01)*    ***G02B 27/09*** *(2006.01)*
***G02B 27/48*** *(2006.01)*

(21) Application number: **15157626.1**

(22) Date of filing: **04.03.2015**

(54) **LENS ARRAY, IMAGE DISPLAY APPARATUS, AND MOVING BODY**

LINSENANORDNUNG, BILDANZEIGEVORRICHTUNG UND BEWEGLICHER KÖRPER

RÉSEAU DE LENTILLES, APPAREIL D'AFFICHAGE D'IMAGE ET CORPS MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2014 JP 2014044776**

(43) Date of publication of application:
**09.09.2015 Bulletin 2015/37**

(73) Proprietor: **Ricoh Company, Ltd.**
**Tokyo 143-8555 (JP)**

(72) Inventor: **Inamoto, Makoto**
**Tokyo 143-8555 (JP)**

(74) Representative: **J A Kemp**
**14 South Square**
**Gray's Inn**
**London WC1R 5JJ (GB)**

(56) References cited:
**WO-A1-2013/179649    JP-A- 2007 173 035**
**US-A1- 2002 034 710    US-A1- 2010 328 773**
**US-B1- 6 219 111**

## Description

### BACKGROUND

Technical Field

The present disclosure relates to a lens array, an image display apparatus, and a moving body. More specifically, the present disclosure relates to a lens array including a plurality of lenses, an image display apparatus including the lens array, and a moving body including the image display apparatus.

Description of the Related Art

Microlens arrays including a plurality of microlenses are known. Depending on the shapes of the microlenses, the visibility of optical images to be formed by such microlens arrays leaves room for improvement.

JP-2003-004907-A discloses a microlens array (randomly-arrayed lens array) in which a plurality of microlenses is formed irregularly or regularly in term of probability distribution, which is different from the basic pattern in which a plurality of microlenses is arranged such that the vertices of microlenses adjacent to each other are entirely equidistant L. This is in order to remove the effect of diffraction light peculiar to regular arrangement of microlenses in addition to moire fringes.

With respect to the microlens array disclosed in JP-2003-004907-A, selectable lens shapes are extremely limited. More specifically, a restriction exists such that the lenses be arranged at a lens pitch that is equidistant L, which is limited to a randomly-arrayed lens array based on a periodically-arrayed lens array including regular hexagonal (or square-shaped) microlenses. In other words, vertically long, randomly-arrayed lens arrays are outside of the application.

Moreover, in JP-2003-004907-A, the eccentric regions of the microlenses of the periodically-arrayed lens array are set within circles centered on the vertex positions of the microlenses. Thus, if the vertex positions are randomly made eccentric within the circles (eccentric regions) in the periodically-arrayed lens array including vertically long microlenses, the lateral random eccentricity ratios become relatively larger than the vertical random eccentricity ratios. As a result, a granular feeling is recognized when observation is made over the microlens array. In other words, depending on the shape of the microlenses, the visibility of optical images to be formed by the microlens array leaves room for improvement.

WO-2013/179649 discloses a head-up display apparatus projects a display image onto a projection surface of a windshield so that a viewer views a virtual image of the display image from an eye box. A screen used in the apparatus is constructed of a plurality of micromirrors. Each micromirror has a convex surface portion being curved to magnify a laser beam toward the eye box. A scanned surface of the screen is provided by an array of the convex surface portions. In a cross section intersecting the scanned surface, adjacent convex surface portions have different curved shapes.

JP-2007173035 discloses a light guide plate for converting light from the light source to the surface, more particularly, the light from the light source is made incident directly to the entrance surface is guided in the direction parallel to the exit surface, the surface of the exit surface a light guide plate for emitting light, and to a light irradiation device and a liquid crystal display device including a light guide plate.

US-2010/328773 discloses a double-sided microlens array applied to a laser beam shaping and homogenizing device of a laser system. The double-sided microlens array is able to shape the energy distribution of an incident laser beam to a square and flat-top beam with the average uniformity of energy and comprises a base plate, a plurality of first micro lenslets and a plurality of second micro lenslets. The first micro lenslet and the second micro lenslet have the convexes with the same figures and comply with the classification of an optical diffractive element, the first micro lenslets and the second micro lenslets are disposed on the first surface and the second surface of the base plate, which are corresponding to each other in order to tightly line up the arrangements of arrays. The first micro lenslets and the second micro lenslets are correspondingly misaligned.

### SUMMARY

In one embodiment, a lens array includes a plurality of lenses each arranged as specified in appended claim 1. With the above-described configuration, the visibility of images (optical images) to be formed by the microlens arrays is improved regardless of the shapes of the microlenses.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

Figs. 1A to 1C are explanatory diagrams of an image display apparatus according to one embodiment of the present invention;
Figs. 2A and 2B are explanatory diagrams of occurrence of diffusion caused by minute convex lenses and coherent noise;
Figs. 3A to 3C are explanatory diagrams of removal of coherent noise;
Figs. 4A to 4C depict exemplary array modes of minute convex lenses;
Figs. 5A to 5E depict other exemplary array modes of minute convex lenses;

Figs. 6A and 6B are explanatory diagrams of anamorphic minute convex lenses;

Figs. 7A and 7B are explanatory diagrams of exemplary scanning target surfaces;

Fig. 8 depicts another exemplary array mode of minute convex lenses;

Fig. 9 is an explanatory diagram of interference fringes formed on an existing microlens array;

Fig. 10 is an explanatory diagram of a randomly-arrayed lens array;

Fig. 11 is an explanatory diagram of a vertex position of each microlens of the randomly-arrayed lens array;

Figs. 12A to 12C are explanatory diagrams of specific examples of the vertically long, randomly-arrayed lens array;

Figs. 13A to 13D are explanatory diagrams of vertex positions of vertically long microlenses of Comparative Examples 1 to 4, and Figs. 13E to 13H are explanatory diagrams of vertex positions of vertically long microlenses of Examples 1 to 4; and

Figs. 14A to 14E are diagrams of vertically long, randomly-arrayed lens array of Examples 5 to 9 according to the invention.

The accompanying drawings are intended to depict examples or example embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

One embodiment is described below.

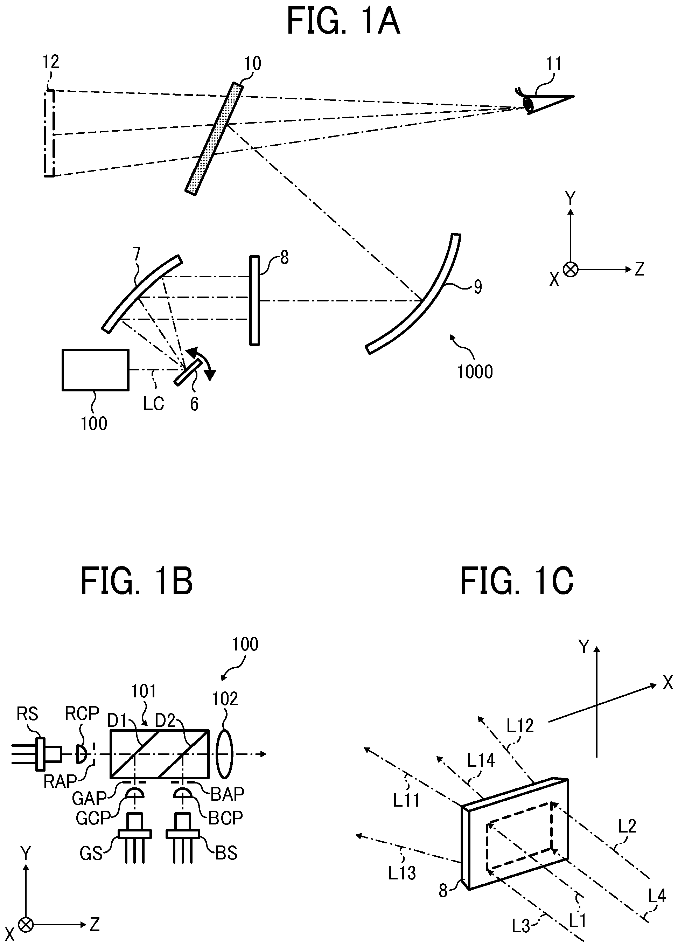

Figs. 1A to 1C are explanatory diagrams of an image display apparatus according to one embodiment.

An image display apparatus 1000 described with reference to Figs. 1A to 1C is a head-up display apparatus to display two-dimensional color images. Fig.

1A depicts the overall apparatus in an illustrative manner.

As one example, the image display apparatus 1000 is mounted on a moving body such as a vehicle, airplane, and vessel, and visualizes navigation information used for operating the moving body (e.g., information including speeds and running distances) by way of a transmission reflection member (e.g., a windshield) disposed on the moving body. Description is given below by appropriately using a XYZ three-dimensional orthogonal coordinate system, i.e., a coordinate system to move together with the moving body, that is set in the moving body. It is to be noted that the "transmission reflection member" denotes a member for transmitting a portion of incident light and reflecting at least a portion of the remaining portion.

In Fig. 1A, a pixel-displaying beam LC for displaying a color image is emitted from a light source 100 in positive Z direction.

Beams of three colors of red (hereinafter indicated by "R"), green (hereinafter indicated by "G"), and blue (hereinafter referred to as "B") are combined into one beam, i.e., the pixel-displaying beam LC.

Fig. 1B depicts one exemplary configuration of the light source 100.

In Fig. 1B, semiconductor lasers serving as light sources indicated by RS, GS, and BS radiate laser light of R, G, and B, respectively. Herein, laser diodes (LD) also referred to as edge-emitting lasers are used as the semiconductor lasers. It is to be noted that vertical cavity surface emitting lasers (VCSEL) may be used for the semiconductor lasers in place of edge-emitting lasers.

Coupling lenses RCP, GCP, and BCP suppress divergence of the laser light beams emitted from the semiconductor lasers RS, GS, and BS.

The laser light flux beams of these colors whose divergence is suppressed by the coupling lenses RCP, GCP, and BCP are shaped through apertures RAP, GAP, and BAP, i.e., the diameters of the light flux beams are regulated.

The shaped laser flux beam of each color is incident on a beam combining prism 101.

The beam combining prism 101 has a dichroic film D1 to transmit R color light and reflect G color light, as well as a dichroic film D2 to transmit R color light and G color light and reflect B color light.

Hence, the beam combining prism 101 emits laser light flux beams of R, G, and B colors combined into one light flux beam.

The emitted light flux is converted to a "parallel beam" of a predetermined light flux diameter by a lens 102.

The "parallel beam" is the pixel-displaying beam LC.

The laser light flux beams of R, G, and B colors including the pixel-displaying beam LC are modulated in intensity by image signals of "a two-dimensional color image" to be displayed, i.e., in accordance with image information (image data). The intensity modulation may be of a direct modulation system in which the semiconductor lasers are directly modulated, or of an external modulation system in which laser light flux emitted from the semiconductor lasers is modulated.

In other words, the semiconductor lasers RS, GS, and BS are modulated in emission intensity by the respective image signals of R, G, and B color components.

The pixel-displaying beam LC emitted from the light source 100 is incident on a two-dimensional deflector 6 serving as an image forming device and is deflected two-dimensionally thereby.

The two-dimensional deflector 6 is a microscopic mirror to swing with respect to "two mutually orthogonal axes" as swinging axes.

In other words, the two-dimensional deflector 6 is specifically a micro electro mechanical systems (MEMS) fabricated as a microscopic swinging mirror device by way of, for example, a semiconductor process.

The two-dimensional deflector is not limited to this example and may have other configurations such as a combination of two microscopic mirrors swingable about one axis such that the swinging directions are orthogonal to each other.

The pixel-displaying beam LC two-dimensionally deflected as described above is incident on a concave mirror 7, so as to be reflected toward a scanning target surface 8 such as a microlens array.

An optical effect of the concave mirror 7 is to remove distortion in the image to be formed with the two-dimensionally deflected pixel-displaying beam LC on a reflective surface 10.

In other words, the pixel-displaying beam LC reflected by the concave mirror 7 is incident on the scanning target surface 8 while moving in a parallel direction with the deflection by the two-dimensional deflector 6, so as to run over the scanning target surface 8 for two-dimensional scanning.

A "color two-dimensional image" is formed on the scanning target surface 8 by this two-dimensional scan.

Displayed on the scanning target surface 8 at each moment are apparently "pixels irradiated with the pixel-displaying beam LC at the moment."

The color two-dimensional image is formed as a "group of pixels displayed at each moment" as a result of the two-dimensional scan with the pixel-displaying beam LC.

As described above, the "color two-dimensional image" is formed on the scanning target surface 8, such that pixel light, which is light in pixel unit of the image information, i.e., light corresponding to each pixel, is incident on a concave mirror 9 to be reflected thereby. The concave mirror 9 functions as a reflective member here.

Although not depicted in Figs. 1A to 1C, the scanning target surface 8 has a "minute convex lens structure" to be described later. The concave mirror 9 includes a "virtual image forming optical system."

The "virtual image forming optical system" forms an enlarged virtual image 12 of the "color two-dimensional image."

The reflective surface 10 is positioned on the front side of the position at which the enlarged virtual image 12 is formed, so as to reflect the light flux for forming the enlarged virtual image 12 toward an observer 11 (an eye of the observer is depicted in Fig. 1A.) It is to be noted that the observer 11, such as an operator who operates the moving body, sees the virtual image from a predetermined observation location on the optical path of the laser light reflected by the reflective surface 10 (transmission reflection member.)

This reflection light allows the observer 11 to see the enlarged virtual image 12 at the observation location.

As depicted in Fig. 1A, the up-down direction of the figure is indicated as "Y direction," and the direction orthogonal to the figure is indicated by "X direction."

For depiction in Fig. 1A, Y direction is usually the up-down direction for the observer 11 and thus is referred to as a "vertical direction."

Further, X direction is usually the right-left direction for the observer and is thus referred to as a "lateral direction."

The scanning target surface 8 has a minute convex lens structure as described above.

As described later, the minute convex lens structure has "a plurality of minute convex lenses arranged densely at a pitch that is close to a pixel pitch." The plurality of minute convex lenses here is two-dimensionally arranged at a predetermined pitch along a plane (XY plane) orthogonal to Z direction such that the convex surfaces make a plane of incidence. Specific arrangement modes include a matrix array with rows in X direction and columns in Y direction, and a honeycomb array (zigzag array). As an example, the optical axes of the minute convex microlenses are parallel to Z axis.

The planar shape of the minute convex lenses, i.e., the shape as viewed in Z-axis direction, is, for example, circular, or regular N-polygonal (N is a natural number not less than three). Individual minute convex lenses have curvatures (radii of curvature) that are equal to each other.

Individual minute convex lenses have a function of diffusing (diffusion function of) the pixel-displaying beam LC isotropically. More specifically, the minute convex lenses have omnidirectionally uniform diffusion power. The "diffusion function" is described briefly below.

Fig. 1C depicts four pixel-displaying beams L1 to L4 incident on the scanning target surface 8.

These four pixel-displaying beams L1 to L4 here are pixel-displaying beams that are incident on four corners of a two-dimensional image to be formed on the scanning target surface 8.

Upon being transmitted by the scanning target surface 8, these four pixel-displaying beams L1 to L4 are converted into forms like beams L11 to L14.

If quadrilateral light flux that has a laterally longer cross section enclosed by the pixel-displaying beams L1 to L4 is made incident on the scanning target surface 8, this light flux becomes "divergent quadrilateral light flux that has a laterally longer cross section enclosed by the beams L11 to L14."

This function of the minute convex lenses is the "diffusion function."

"Divergent light flux enclosed by the beams L11 to L14" is a resultant of temporally grouping pixel-displaying beams thus converted to divergent light flux.

The pixel-displaying beams are diffused in order "for the light flux reflected by the reflective surface 10 to irradiate a wider area in the vicinity of the observer 11 eye."

In case where the diffusion function is not provided, the light flux reflected by the reflective surface 10 irradiates a "smaller area in the vicinity of the observer 11 eye."

For this reason, when the observer 11 moves his/her head and the position of the eye deviates from the "smaller area," the observer 11 becomes unable to see the enlarged virtual image 12.

As described above, the pixel-displaying beam LC is diffused, such that the light flux reflected by the reflective surface 10 irradiates a "wider area in the vicinity of the observer 11 eye."

Hence, even when the observer "moves his/her head a little," he/she reliably sees the enlarged virtual image 12.

As described above, according to the present embodiment, the pixel-displaying beam LC incident on the scanning target surface 8 is a parallel beam, while the beams transmitted by the scanning target surface 8 becomes a divergent beam.

Incidentally, in a scan-type image display apparatus to form an image by scanning a scanning target medium (e.g., a transmissive or a reflective screen) with laser light, speckle noise is generated which makes a to-be-seen virtual image flicker irregularly due to the strong coherence of the laser light, which is coherent light. To deal with this situation, a microlens array (minute convex lens structure) having a plurality of micro lenses (minute convex lenses) arranged at a pitch close to the beam diameter of the laser light is used as the scanning target medium in the scan-type image display apparatus. By doing so, the intensity of the speckle noise is reduced while the angle of divergence is controlled at discretion, thus improving the visibility of the virtual image.

The scanning target surface 8 according to embodiments of the present invention has the "minute convex lens structure" having a plurality of minute convex lenses for diffusing the pixel-displaying beam LC arranged densely at a pitch close to the pixel pitch.

The minute convex lenses are larger than the "beam diameter of the pixel-displaying beams LC."

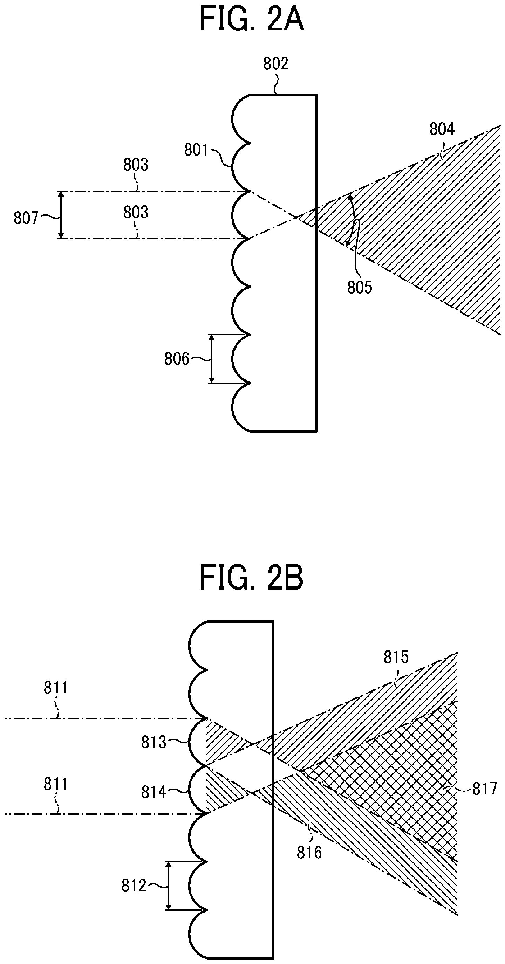

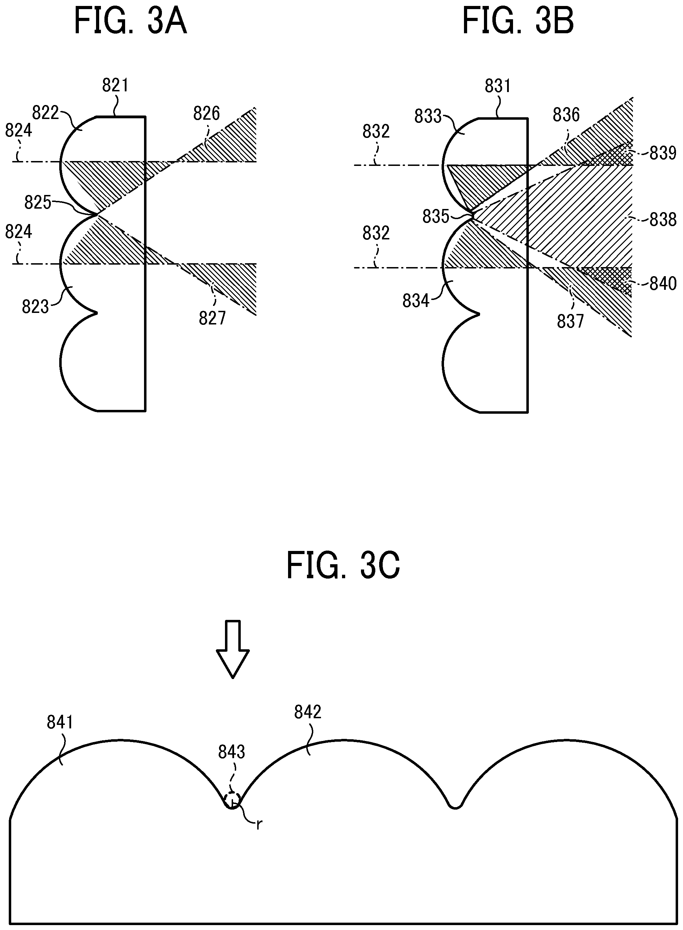

The minute convex lenses are larger than the "beam diameter of the pixel-displaying beam LC" in order to reduce coherence noise. This is described below with reference to Figs. 2A and 2B and Figs. 3A to 3C.

Fig. 2A depicts a scanning target surface 802.

The scanning target surface 802 has a minute convex lens structure having minute convex lenses 801 arranged therein.

A "pixel-displaying beam" 803 has a light flux diameter 807 that is smaller than the size of each minute convex lens 801.

In other words, the minute convex lenses 801 have a size 806 that is larger than the light flux diameter 807.

It is to be noted that according to the present embodiment, the pixel-displaying beam 803 is laser light flux and has a distribution of light intensity in Gaussian distribution around the center of the light flux.

Hence, the light flux diameter 807 is a distance in radial direction of the light flux having light intensity in the light intensity distribution to lower to "$1/e^2$."

In Fig. 2A, the light flux diameter 807 is depicted in such a manner as to have a size equal to the size 806 of the minute convex lenses 801. The light flux diameter 807 however may be of a different size from the "size 806 of the minute convex lenses 801."

The size may be any size insofar as the size 806 of the minute convex lenses 801" is not exceeded.

In Fig. 2A, the pixel-displaying beam 803 is incident on one of the minute convex lenses 801 as a whole and is converted to diffused light flux 804 having an angle of divergence 805.

It is to be noted that the "angle of divergence" is also referred to as an "angle of diffusion" below.

In the state of Fig. 2A, the diffused light flux 804 is one in number and does not have interfering light flux, and thus coherent noise (speckle noise) is not generated.

It is to be noted that the magnitude of the angle of divergence 805 is appropriately settable in accordance with the shape of the minute convex lenses 801.

In Fig. 2B, a pixel-displaying beam 811 has a light flux diameter that is twice as large as a pitch 812 at which the minute convex lenses are arranged, and is incident over two minute convex lenses 813 and 814.

In this case, the pixel-displaying beam 811 is diffused by the two minute convex lenses 813 and 814 onto which the beam is incident, into two divergent light flux beams 815 and 816.

The two divergent light flux beams 815 and 816 overlap each other in an area 817 and generate coherent noise by the mutual interference in this portion.

Fig. 3A depicts a state in which a pixel-displaying beam 824 incident over two minute convex lenses 822 and 823 of a scanning target surface 821.

The pixel-displaying beam 824 has a light flux diameter that is equal to the size of, for example, a minute convex lens 822.

In this case, the portion of the beam incident on the minute convex lens 822 becomes divergent light flux beam 826, while the portion of the beam incident on a minute convex lens 823 becomes divergent light flux beam 827, upon being diffused.

Since the divergent light flux beams 826 and 827 are diffused in directions that go away from each other, these beams do not overlap with each other, hence not generating coherent noise in this state.

In other words, generation of coherent noise due to the light flux diffused by the minute convex lenses is preventable by setting the beam diameter of the pixel-displaying beam 824 to not larger than the size of the minute convex lens 822.

Specific numerical examples are given with respect to the diameters of the minute convex lenses and the beam diameter of the pixel-displaying beam to be incident on the scanning target surface.

The beam diameter of the pixel-displaying beam is easily set on the order of, for example, 150 μm.

In this case, the size of the minute convex lenses including the minute convex lens structure may be set to a size larger than the above-mentioned 150 μm, such as 160 μm or 200 μm.

The scanning target surface 821 depicted in Fig. 3A includes minute convex lenses 822, 823 ... arranged without gap.

Hence, the "width of a border portion (hereinafter also referred to as a "border width") between adjacent minute convex lens surfaces is zero."

For this reason, the pixel-displaying beam 824 that is incident on the minute convex lenses 822 and 823 as depicted in Fig. 3A simply generates the divergent light flux beams 826 and 827.

However, in the minute convex lens structure actually configured, the border width between "adjacent minute convex lenses" does not "become zero."

More specifically, in the minute convex lens structure actually configured as a scanning target surface 831 depicted in Fig. 3B, a border portion 835 between minute convex lenses 833 and 834 does not have "a width of zero."

The border portion 835 between the minute convex lenses 833 and 834 microscopically has a "curved surface that is smoothly continuous," and the curved surface is formed in the border portion 835.

The curved surface thus formed in the border portion 835 acts as a "fine lens surface" with respect to a portion of incident light when a pixel-displaying beam is incident on this curved surface portion.

Hence, a pixel-displaying beam 832 incident over the minute convex lenses 833 and 834 generates a divergent light flux beam 838 as well as divergent light flux beams 836 and 837.

The divergent light flux beam 838 is generated by the lens action of the curved surface of the border portion 835 and overlaps and interferes with the divergent light flux beams 836 and 837 in areas 839 and 840, which results in coherent noise.

Fig. 3C is an explanatory diagram for describing "reduction and prevention of coherent noise" in the minute convex lens structure.

In the minute convex lens structure, a border portion 843 where the lens surfaces of minute convex lenses 841 and 842 smoothly join each other configures a "fine lens surface" itself.

The curved surface shape of the border portion 843 has radius of curvature "r" as indicated in the figure.

To facilitate the description, the pixel-displaying beam incident on the minute convex lens structure here is single color laser light flux of "wavelength λ."

In case where radius of curvature r of the border portion 843 is larger than wavelength λ of the pixel-displaying beam (r > λ), the curved surface with radius of curvature r has a lens action on the pixel-displaying beam to be incident thereon.

Hence, in this case, the portion of the beam passing the border portion 843 overlaps and interferes with light flux diffused by the minute convex lenses 841 and 842, which results in coherent noise.

Meanwhile, where radius of curvature r of the border portion 843 is smaller than wavelength λ of the pixel-displaying beam, the border portion 843 comes to be a "subwavelength structure" with respect to the pixel-displaying beam.

As is well known, the subwavelength structure does not produce a lens action on "light of a wavelength larger than the subwavelength structure."

Hence, the border portion 843 with radius of curvature r that is smaller than wavelength λ neither acts as a "lens" nor transmits the pixel-displaying beam straightly for divergence.

For this reason, the portion of the beam transmitted straightly by the border portion 843 does not overlap with the divergent light flux diffused by the minute convex lenses 841 and 842, and thus coherent noise is not generated due to interference.

More specifically, the relationship of magnitude among beam diameter d and wavelength λ of the pixel-displaying beam, size D of the minute convex lenses, and radius of curvature r of the surface configuring the border portion is desirably set as follows:

$$D > d, \lambda > r.$$

In case where the two-dimensional enlarged virtual image to be displayed is a monochrome image, the pixel-displaying beam includes single color coherent light of wavelength λ.

Hence, in this case, the above D, d, r, and λ are set to satisfy the above relationship of magnitude, thus suppressing coherent noise.

As in the present embodiment, in case where a two-dimensional color image (enlarged virtual image) is to be displayed, the pixel-displaying beam LC is a combination of beams of the three colors, R, G, and B.

Provided that the wavelengths of these three beams are λR (= 640 nm), λG (= 510 nm), and λB (= 445 nm), the relationship of magnitude of these is represented as "λR > λG > λB."

Hence, from the viewpoint of prevention of coherent noise, radius of curvature r of the surface configuring the above-described border portion may be set smaller than the minimum wavelength λB, for example, to 400 nm.

However, setting radius of curvature r smaller than the largest wavelength λR, for example, to 600 nm, allows for prevention of coherent noise due to R components of the pixel-displaying beam.

In other word, coherent noise is effectively reduced.

Where "r (for example, 500 nm) < λG," coherent noise due to the light including R components and G components of the pixel-displaying beam is prevented.

In case where the pixel-displaying beam LC is a "combination of beams of the three colors, R, G, and B," coherent noise is generated independently for these three-color components.

The independent coherent noises for the beams of three colors, R, G, and B, "as a whole" become perceivable coherent noise.

Hence, removal of coherent noise of at least one of the three colors significantly improves perceivable coherent noise, thus contributing enhancement of image quality of the observed image.

Accordingly, even "R components of the longest wavelength" of the three colors have an effect in preventing coherent noise, and the "reduction effect" increases in the order of G components and B components.

Hence, setting radius of curvature r smaller than the longest wavelength λR, for example, to 600 nm helps achieve a certain level of effect in respect of reduction in coherent noise.

The visibility of coherent noise is generally higher in the order of R ≈ G > B, although the noise intensity varies depending on the wavelength and the beam diameter, or a multimode/single mode.

In other words, light of wavelength λB is less perceptive to human eyes, and coherent noise tends to be less conspicuous.

Hence, setting radius of curvature r smaller than wavelength λG, for example, to 500 nm, allows for reduction of coherent noise due to light of relatively highly visible wavelengths λR and λG.

Even when coherent noise is generated due to light of less visible wavelength λB, such noise is not so conspicuous.

Obviously, setting radius of curvature r smaller than wavelength λB, for example, to 400 nm, reduces coherent noise even more effectively, as described above.

The plurality of minute convex lenses including the minute convex lens structure each has a size on the order of 100 μm as described above, and this size is achievable as typical "microlenses."

Further, the minute convex lens structure having the plurality of minute convex lenses arranged therein is achievable as a "microlens array."

Hence, the minute convex lenses are hereinafter also referred to as "microlenses," and the minute convex lens structure is also referred to as a "microlens array."

The microlens array is generally fabricated in such a manner that a mold with a surface for transferring a lens surface array of the microlens array is fabricated, and that this mold is used to transfer the mold surface to a resin material.

Known methods for forming the transfer surface on the mold include a method using cutting or photolithography.

The transfer of the transfer surface to a resin material is conducted by, for example, "injection molding."

Reduction in radius of curvature at the border portion between adjacent microlenses is achieved by reducing the border width.

The smaller border width is achieved by sharpening the border portion configured by adjacent microlens surfaces.

Various machining methods are known to reduce the size of the "border width between adjacent microlenses" in a mold for the microlens array.

For example, Japanese Patent No. 4,200,223 discloses a method of removing a non-lens portion of a border portion by increasing the radius of curvature of each microlens through anisotropic etching and ion machining.

Further, Japanese Patent No. 5,010,445 describes a method of removing a flat surface between adjacent microlenses by using isotropic dry etching.

For example, these known methods are used to fabricate a microlens array that has a surface configuring the border portion between adjacent microlenses with a sufficiently small radius of curvature.

In other words, the above-described scanning target surface may be configured as a microlens array having a structure in which a plurality of microlenses are arranged close to each other.

Coherent noise due to R-component light is prevented by the configuration of the microlens array having each surface configuring the border portion between adjacent microlenses with radius of curvature r that is smaller than 640 nm.

Further, coherent noise due to R-component light and G-component light is prevented by the configuration of the microlens array having radius of curvature r that is smaller than 510 nm.

Coherent noise caused by R-, G- and B-component light is prevented by the configuration of the microlens array having each surface configuring the border portion between adjacent microlenses with radius of curvature r that is smaller than 445 nm.

In the foregoing, description is given of the image display apparatus (head-up display apparatus) depicted in Figs. 1A to 1C.

The concave mirror 7 depicted in Figs. 1A to 1C has a "function of removing distortion in an image to be formed on the reflective surface 10 by the two-dimensionally deflected pixel-displaying beam LC."

More specifically, the concave mirror 7 functions as a "deflection range regulator for adjusting the deflection range of the two-dimensionally deflected pixel-displaying beam and regulating the scanning range of the scanning target surface."

Such a deflection range regulator may be eliminated in case of a negligible angle of deflection of the pixel-displaying beam that is two-dimensionally deflected by the two-dimensional deflector 6.

Conditions for the minute convex lens structure (microlens array) and the minute convex lenses (microlenses) are as described above.

More specifically, "a plurality of minute convex lenses larger than the beam diameter of the pixel-displaying beam is arranged densely at a pitch that is close to the pixel pitch to configure the minute convex lens structure."

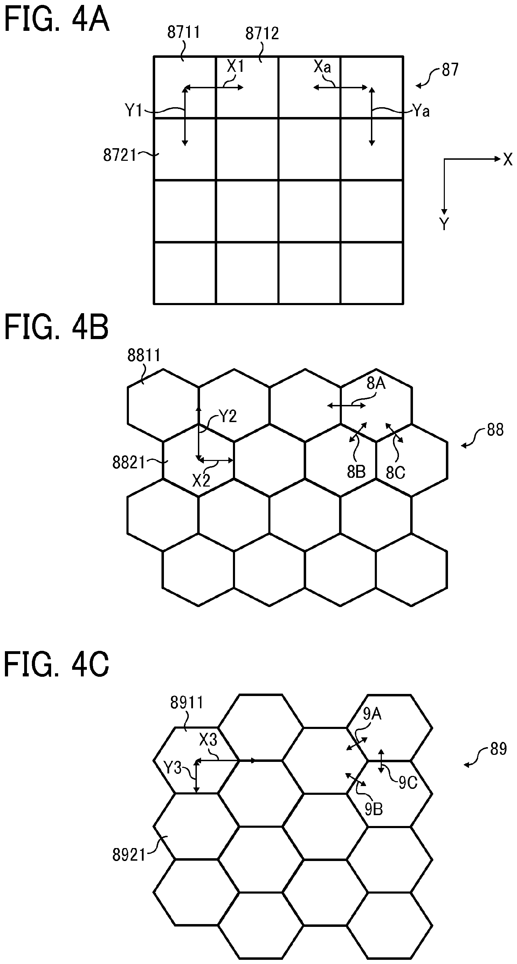

Three specific exemplary modes of the microlens array satisfying such conditions are depicted in Figs. 4A to 4C.

A microlens array 87 of which a mode example is depicted in Fig. 4A has square-shaped microlenses 8711, 8712, ... arranged in a square matrix.

The number of pixels of a two-dimensional image (enlarged virtual image) to be displayed on the head-up display apparatus is decided by an arrangement period of the microlenses in the micro lens array.

In case of the array of Fig. 4A, the centers of the microlenses 8711 and 8712 next to each other in X-axis direction are at a distance X1.

Further, in the figure, the centers of the micro lens 8711 and a micro lens 8721 next to each other in Y-axis direction are at a distance Y1. These X1 and Y1 may be considered as an "effective size of one pixel."

The "effective size of one pixel" is hereinafter also referred to as an "effective pitch of one pixel" or "effective pixel pitch."

A microlens array 88 of which an exemplary mode is depicted in Fig. 4B has a regular hexagonal microlenses 8811, 8821, ... thickly arranged therein.

In the array of microlenses in this case, the arranged microlenses including the microlens 8811 do not have parallel sides in X-axis direction.

In other words, the upper side and lower side of the microlenses arranged in X-axis direction make a "zigzag shape," and thus such an array is referred to as a "zigzag array."

A microlens array 89 of which an exemplary mode is depicted in Fig. 4C has a regular hexagonal microlenses 8911, 8921, ... thickly arranged therein.

In the array of microlenses in this case, the arranged microlenses including the microlens 8911 have parallel sides in X-axis direction. The array in this case is referred to as an "armchair array."

The zigzag array and the armchair array are referred to as a "honeycomb array" collectively.

The zigzag array depicted in Fig. 4B is rotated by 90 degrees to configure the armchair array depicted in Fig. 4C.

In the zigzag array, the array of the microlenses has X2 depicted in the figure that may be considered as an "effective pixel pitch in X-axis direction" and Y2 that may be considered as an "effective pixel pitch in Y-axis direction."

In the armchair array, X3 depicted in the figure may be considered as an "effective pixel pitch in X-axis direction," and Y3 may be considered as an "effective pixel pitch in Y-axis direction."

In Fig. 4B, the effective pixel pitch Y2 is a distance between the center of the microlens 8821 and the middle point of a side on the right of the microlens 8811.

In Fig. 4C, the effective pixel pitch X3 is a distance between the middle point of a side in contact with two microlenses contacting the microlens 8911 at the right side, and the center of the microlens 8911.

In the zigzag array, since the effective pixel pitch X2 in X-axis direction is small, resolution in X-axis direction in image display is improved.

Further, in the armchair array, resolution in Y-axis direction is improved.

In this manner, the microlenses are arranged in a honeycomb shape, such that pixels smaller than the actual lens diameter are effectively rendered and the number of effective pixels is increased.

As described above, in the minute convex lens structure (microlens array) of the scanning target surface, the border portion between adjacent microlenses has radius of curvature r.

Radius of curvature r is, for example, smaller than wavelength λR of R components of the pixel-displaying beam.

Hence, as described earlier, "coherent noise due to interference by R-component coherent light" is prevented.

However, in case where radius of curvature r is larger than wavelength λG of G-component light and wavelength λB of B-component light of the pixel-displaying beam, these light beams are diffused at the border portion and interfere with each other.

Hence, coherent noise is generated due to this interference.

Herein, in case of the "array in a square matrix" in Fig. 4A, divergence (diffusion) at the border portion occurs in two directions, i.e., Xa direction and Ya direction in the figure, each of which could be a cause of coherent noise.

On the other hand, in case of the array of Fig. 4B, diffusion at the border portion occurs in three directions of 8A, 8B, and 8C. Further, in case of Fig. 4C, diffusion occurs in three directions of 9A, 9B, and 9C.

In other words, diffusion at the border portion occurs in two directions in the square matrix array and three directions in the honeycomb array.

Hence, coherent noise is generated in two directions in the square matrix array and three directions in the honeycomb array.

In other words, coherent noise to be generated is "dispersed in two directions" in the square matrix array while being "dispersed in three directions" in the honeycomb array.

Coherent light to cause coherent noise has a constant maximum intensity.

Hence, as the number of dispersions increases, the "contrast of the coherent noise to be generated" is weakened and becomes less visible (less conspicuous.)

Hence, in case where "coherent noise due to components of a wavelength smaller than radius of curvature r of the border portion" is tolerated, the "honeycomb array" is preferably chosen for the array of the microlenses.

It is to be noted that in case where the border width is larger than the above-mentioned wavelength λR, coherent noise due to R-component coherent light is also generated.

However, the "border width between the lens surfaces" of adjacent minute convex lenses is microscopic, and the coherent light to be incident on the portion with the microscopic border width has low light energy.

Hence, the light energy to generate coherent noise is not high either.

Accordingly, even if coherent noise is generated, the above-described dispersion in three directions makes the contrast weaker in case of the honeycomb array.

Hence, visibility of coherent noise is effectively reduced.

As described with reference to Fig. 1A, the virtual image forming optical system to form the two-dimensional enlarged virtual image 12 includes the concave mirror 9.

In other words, the enlarged virtual image 12 is a group of pixel images to be formed by the concave mirror 9.

The diffusion function of the minute convex lenses is exerted differently in directions orthogonal to each other by imparting an anamorphic function to the microlenses, which are minute convex lenses.

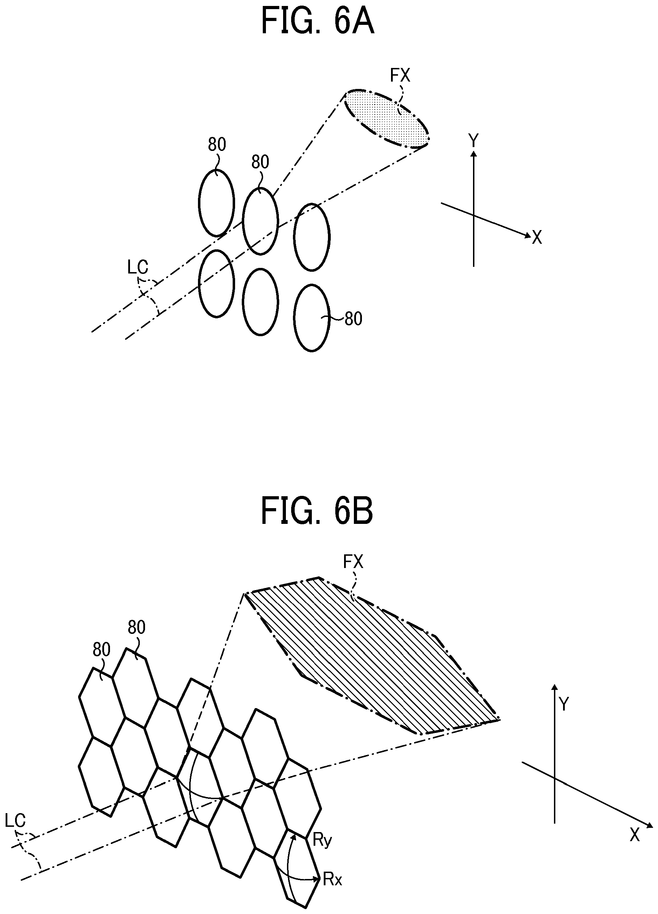

With reference to Figs. 6A and 6B, microlenses (minute convex lenses) that are thickly provided on the scanning target surface 8 are individually illustrated by the reference numeral 80 in Figs. 6A and 6B. In the example of Fig. 6A, the minute convex lenses have a vertically long oval shape and are arranged in a "matrix array."

In the example of Fig. 6B, the minute convex lenses 80 have a vertically long hexagonal shape with parallel sides in X-axis direction and are arranged in the "armchair array."

The minute convex lenses 80 have radii of curvature of the lens surfaces that are different in X-axis directions and Y-axis direction. Radius of curvature Rx in X-axis direction is smaller than radius of curvature Ry in Y-axis direction. In other words, the minute convex lenses 80 have a larger curvature in X-axis direction than in Y-axis direction.

Hence, the minute convex lenses 80 have power (diffusion power) in X-axis direction that is greater than power (diffusion power) in Y-axis direction.

Further, since curvatures are given both in X-axis direction and Y-axis direction of the lens surfaces, as depicted in Fig. 6B, the minute convex lenses may be shaped hexagonal, and the "visibility of coherent noise" is lowered as described above.

Figs. 6A and 6B depict a case in which the pixel-displaying beam LC is incident on one of the minute convex lenses 80. In Figs. 6A and 6B, the individual minute convex lenses 80 have a larger width in Y-axis direction than in X-axis direction.

Further, as depicted in Fig. 6A, the beam diameter of the pixel-displaying beam LC has "an oval shape that is longer in Y-axis direction," and the light flux diameter in Y-axis direction is set smaller than the diameter of the minute convex lenses 80 in Y-axis direction.

In this manner, the pixel-displaying beam LC is allowed to "be incident so as not to cross over a lens border," and the cross-sectional shape of the divergent light flux to be emitted has an oval shape that is longer in X-axis direction (laterally longer.)

Regardless of the length in Y-axis direction and length in X-axis direction of the minute convex lenses, where the curvature in X-axis direction is greater than the curvature in Y-axis direction, the divergent beam to be emitted from each minute convex lens has a light flux cross section FX that is longer in X-axis direction than in Y-axis direction. In other words, the light flux cross section FX is laterally longer.

The head-up display apparatus described above may be, for example, used as an on-vehicle automobile part. In this case, X-axis direction is a "lateral direction as viewed from the driver's seat," and Y-axis direction is a "vertical direction."

The reflective surface 10 in this case is the windshield of an automobile.

In this case, for example, a "navigation image" is displayable as the enlarged virtual image 12 frontward on the windshield, allowing the driver, who is the observer 11, to observe the image while sitting on the driver's seat with the eyes almost fixed.

In such a case, as described above, the enlarged virtual image to be displayed is an "image that is laterally longer as viewed from the driver"; in other words, an image to be formed on the microlenses and an enlarged virtual image are generally desirably images that are larger in angle of view in X-axis direction.

Further, as described above, so as for the driver, who is the observer, to recognize the display even when he/she views a display image diagonally from the right or left, "the angle of view is desirably larger" in the lateral direction "as compared to the vertical direction.

For this reason, the angle of diffusion (anisotropic diffusion) is desirably larger in the longitudinal direction of the enlarged virtual image, i.e., X-axis direction, as compared to the short-length direction, i.e., Y-axis direction.

Accordingly, the minute convex lenses of the scanning target surface are preferably anamorphic lenses that have a larger curvature in the longitudinal direction than in the short-length direction of the image formed on the microlenses or the enlarged virtual image. The angle of diffusion for diverging the pixel-displaying beam is set wider in the "lateral direction than in the vertical direction of the two-dimensional image."

In this manner, light is diverged in a range that is minimum in terms of attaining the desired angle of view of the head-up display apparatus, the light use efficiency is improved, and the brightness of the display image is improved.

Obviously, the above-configuration is achieved not with the "anisotropic diffusion" as described above but with the "isotropic diffusion" in which the angles of diffusion are equal in the vertical direction and the lateral direction.

However, in case of the head-up display apparatus for use as an on-vehicle automobile part, the driver rarely conducts observation from a position in the up-down direction with respect to the display image.

Hence, in such a case, the angle of diffusion for diffusing the pixel-displaying beam is preferably set wider in the "lateral direction than in the vertical direction of the two-dimensional image" in terms of light use efficiency as described above.

As has been known, the minute convex lenses (micro lenses) may have an "aspherical" lens "surface."

While the anamorphic lens surface described immediately above is also an "aspherical surface," the lens surfaces of the minute convex lenses may be provided in the form of a more typical aspherical surface, such that aberration correction is performed as well.

Aberration correction allows an "irregularity in intensity of diffusion" to be reduced.

The minute convex lens structures (microlens arrays) depicted in Figs. 4A to 4C include individual minute convex lenses (microlenses) of square shape or hexagonal shape.

The minute convex lenses may have a shape other than such regular polygonal shapes; for example, the lenses may have a shape that the shape of the microlenses depicted in Figs. 4A to 4C is elongated in one direction.

In this case, the square shape is modified to a "rectangular shape," and the regular hexagonal shape is modified to an elongate variant hexagonal shape.

In the arrays of Figs. 4A to 4C, the minute convex lens structures have effective pixel pitches of X1 to X3 in X-axis direction and Y1 to Y3 in Y-axis direction.

Where the effective pixel pitches in X-axis direction thus defined are generally denoted by "SX" and the effective pixel pitches in Y-axis direction are generally denoted by "SY," the ratio of these pitches SY/SX is referred to as an "aspect ratio."

In case of Fig. 4A, the aspect ratio is "Y1/X1." Since X1 = Y1, the aspect ratio is one.

The aspect ratio in the case of Fig. 4B is "Y2/X2." Since Y2 > X1, the aspect ratio is larger than one.

The aspect ratio in the case of Fig. 4C is "Y3/X3." Since Y3 < X3, the aspect ratio is smaller than one.

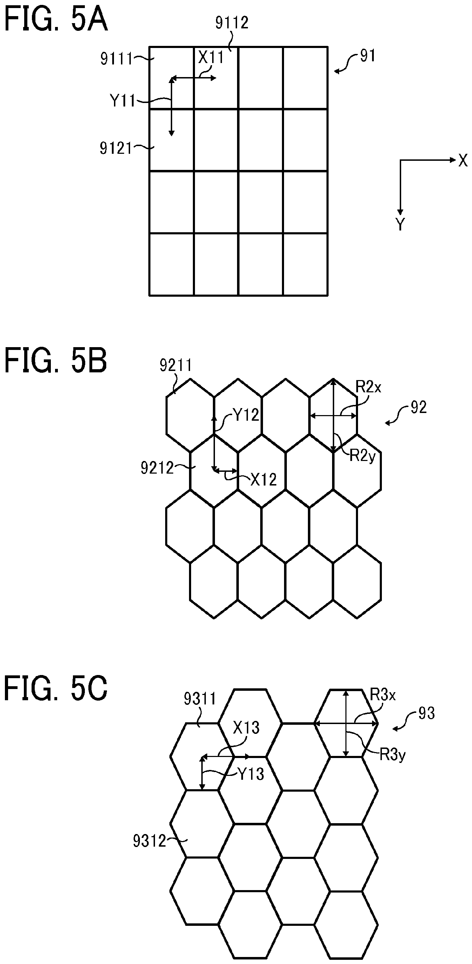

In the minute convex lens structures of microlens arrays 91 to 95 depicted in Figs. 5A to 5E, the effective pixel pitches are defined as described below in the same manner as in the case of Figs. 4A to 4C.

More specifically, the effective pixel pitches in X-axis direction and Y-axis direction are "X-11 and Y11," "X12 and Y12," and "X13 and Y13," respectively, in Figs. 5A to 5E.

The minute convex lens structure of Fig. 5A has rectangular minute convex lenses 9111, 9112, ... 9121, ... arranged in square matrix, and the aspect ratio is larger than one.

In the microlens arrays 92 to 95 depicted in Figs. 5B to 5E, the minute convex lens structures thereof are of a honeycomb array.

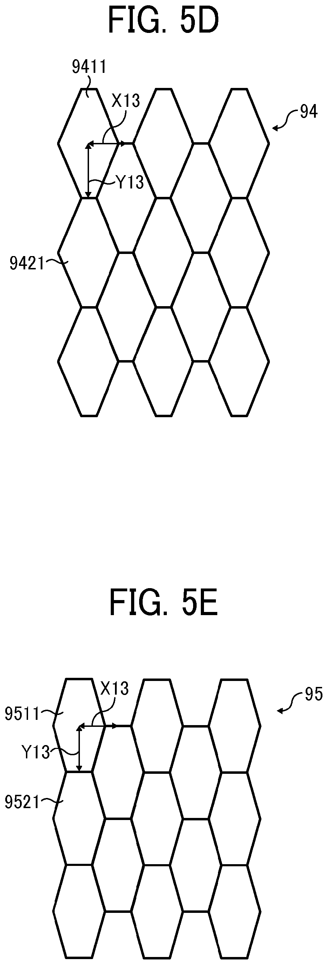

In the honeycomb arrays depicted in Figs. 5B, 5D, and 5E, the aspect ratios "Y12/X12" and "Y13/X13" are both larger than one.

The five examples of the minute convex lens structure depicted in Figs. 5A to 5E each include "minute convex lenses" that are longer in Y-axis direction than in X-axis direction.

In this manner, in case of the "minute convex lenses having a shape that is longer in Y-axis direction than in X-axis direction," the minute convex lenses are easily shaped by setting the curvature in X-axis direction larger than the curvature in Y-axis direction.

Hence, the earlier-described "anamorphic optical function" is easily achievable "where the power is greater in X-axis direction than in Y-axis direction."

For example, in the case of the example depicted in Fig. 5A, specific examples include X11 = 150 $\mu$m, Y11 = 200 $\mu$m, and the aspect ratio = 200/150 = 4/3 > 1.

Obviously, in this case, the beam diameter of the pixel-displaying beam is set smaller than 150 $\mu$m in X-axis direction and smaller than 200 $\mu$m in Y-axis direction.

The arrays of the minute convex lenses depicted in Figs. 5B to 5D each are of a honeycomb array, and the individual minute convex lenses have a "shape that is longer in Y-axis direction."

The array of Fig. 5B is of a "zigzag type," and the arrays of Figs. 5C to 5E are of an "armchair type."

The "zigzag type, vertically long honeycomb array" of Fig. 5B and the "armchair type, vertically long honeycomb arrays" of Fig. 5C are obviously both adoptable.

However, the exemplary arrays of Fig. 5C are distinctive over the exemplary example of Fig. 5B in the following aspects:

Specifically, the arrays of Fig. 5C has, as compared to the array of Fig. 5B, a smaller "difference in size between X-axis direction and Y-axis direction" of microscopic lenses, and the "difference in effective pixel size" is smaller in the vertical and lateral directions.

Specific dimensions are given.

For example, in Fig. 5B, the lens diameter in X-axis direction of lenses including the minute convex lenses 9211 and 9212 is R2x = 100 $\mu$m, and the lens diameter thereof in Y-axis direction is R2y = 200 um.

In this regard, the effective pixel pitch in X-axis direction (= X12) is 50 $\mu$m, and the effective pixel pitch in Y-axis direction (= Y12) is 150 $\mu$m.

Likewise, in Fig. 5C, the lens diameter in X-axis direction of lenses including the minute convex lenses 9311 and 9312 is R3x = 100 $\mu$m, and the lens diameter thereof in Y-axis direction is R3y = 200 $\mu$m.

Further, the vertical sides of the hexagonal shape of the lenses including the minute convex lens 9311 have a length of 50 $\mu$m.

In this regard, the effective pixel pitch in X-axis direction (= X13) is 75 $\mu$m, and the effective pixel pitch in Y-axis direction (= Y13) is 100 $\mu$m.

Hence, "the effective pixel pitches in X- and Y-axis directions" have "values closer to each other" in the array of Fig. 5C (75 $\mu$m and 100 $\mu$m) as compared to the case of the array of Fig. 5B (50 $\mu$m and 100 $\mu$m).

In Figs. 5C, 5D, and 5E, the effective pixel pitches in X-axis direction are X13, and the effective pixel pitches in Y-axis direction are Y13.

This is because the pixel pitch in X-axis direction and the pixel pitch in Y-axis direction are similarly defined in the honeycomb arrays (armchair type honeycomb arrays) of Figs. 5C to 5E.

In Fig. 5D, lenses such as minute convex lenses 9411 and 9421 have shorter up-down sides parallel along X-axis direction and longer diagonal sides.

Further, in Fig. 5E, lenses such as minute convex lenses 9511 and 9521 have shorter up-down sides parallel along X-axis direction and longer diagonal sides.

As depicted in these figures, the modified hexagonal shape of the minute convex lenses allows for adjustment of pixel pitch X13 in X-axis direction and pixel pitch Y13 in Y-axis direction.

Like the case of Fig. 5C, the arrays depicted in these Figs. 5D and 5E have a "vertically long minute convex lens structure," and thus "equalization of effective pixel pitches" in X- and Y-axis directions is achievable.

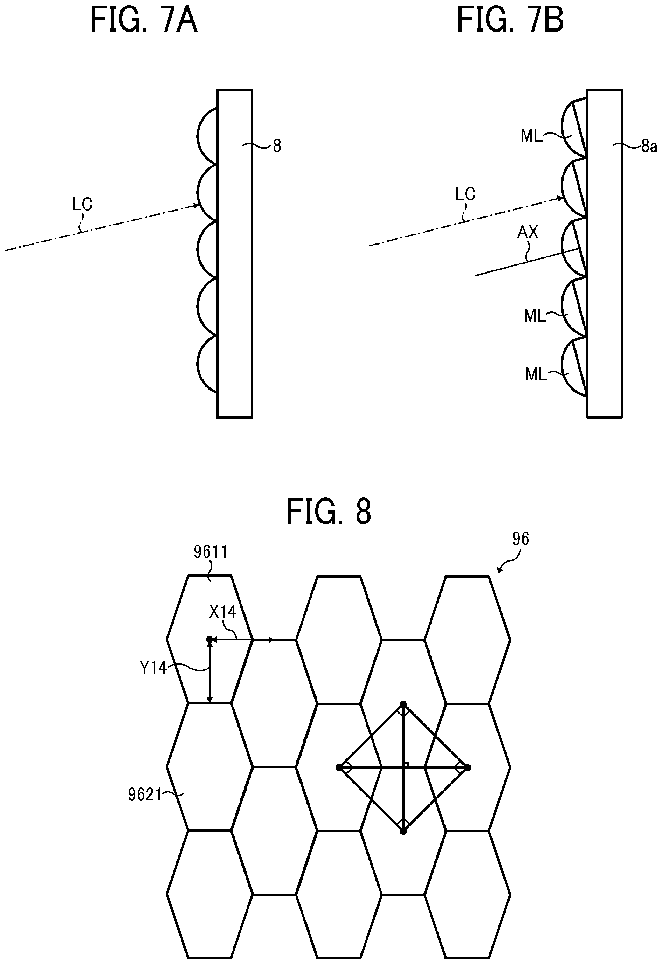

For example, lenses such as microlenses 9611 and 9621 of a microlens array 96 depicted in Fig. 8 have a vertically long hexagonal shape similar to that of the microlens array 95 depicted in Fig. 5D.

The array of lenses including the microlens 9611 depicted in Fig. 8 is an "armchair type, vertically long honeycomb array" similar to that in Fig. 5C.

The hexagonal shape of the lenses including the microlens 9611 is set such that effective pixel pitch X14 in X-axis direction is perfectly equal to effective pixel pitch Y14 in Y-axis direction.

In this manner, in the armchair type, vertically long honeycomb array, the aspect ratio may be set to one. In case of minute convex lenses having a size that is larger than or approximately equal to the beam diameter of the pixel-displaying beam, if the aspect ratio of the effective pixel pitches is one, reproducibility by way of virtual images is enhanced with respect to the image data to be projected as such virtual images. This is because the pixel pitch on the microlens array of the image data to be projected as virtual images is matched with the effective pixel pitch, or the effective pixel pitch is brought closer to the pixel pitch on the microlens array of the image data to be projected as virtual images as compared to other effective pixel pitches.

In the foregoing, the vertical direction is described as the "up-down direction," and the lateral direction is described as the "right-left direction;" however, this is for the sake of convenience in terms of specificity.

The vertical direction in the actual space may be different depending on the direction in which the microlens array is installed in the image display apparatus or in which the image display apparatus is mounted to a moving body such as a vehicle.

The two-dimensional deflector 6 reciprocatingly swings a plurality of times with respect to one axis (swinging along a second axis) while reciprocatingly swinging with respect to the other axis (swinging along a first axis) one time. In many cases, X-axis direction, which is the longitudinal direction of the enlarged virtual image, is set as the direction in which scan is performed on the microlens array with the pixel-displaying beam LC by the swing along the second axis. Hence, the vertical sides of the "armchair type" hexagonal micro lenses that are parallel along X-axis direction are approximately parallel to the direction in which scan is performed with the pixel-displaying beam LC on the microlens array. The "armchair type, vertically long honeycomb structure" is formed by extending the distance between two sides that are the most parallel to the direction in which scan is performed on the "armchair type," hexagonal microlens array with the pixel-displaying beam, i.e., the distance between a side that is the most parallel to the direction in which scan is performed on the microlens array with the pixel-displaying beam and a side opposite thereto, into a direction orthogonal to these two sides.

Hence, the armchair type, vertically long honeycomb array provides for improvement in brightness and increase in number of effective pixels, and besides for reduction in difference between the effective pixel pitch in X-axis direction (lateral direction) and the effective pixel pitch in Y-axis direction (vertical direction).

Any shape is selectable as the "shape of the minute convex lenses" as depicted in Figs. 5C to 5E, for example, for controlling the angle of divergence of divergent light flux.

In the head-up display apparatus depicted in Fig. 1A, the pixel-displaying beam LC is orthogonally incident on the minute convex lens structure of the scanning target surface 8.

However, the mode of incidence of the pixel-displaying beam on the scanning target surface is not limited to such "orthogonal incidence."

For example, a mode of incidence as in Fig. 7A is conceivable in case where the head-up display apparatus is downsized by cleverly aligning optical devices from the light source to the reflective surface.

Specifically, in the example of Fig. 7A, the pixel-displaying beam LC is incident on the scanning target surface 8 at an angle.

In case where the lens surfaces of the minute convex lenses are "aspherical surfaces," the pixel-displaying beam LC is incident at an angle with respect to the optical axis of the aspherical surfaces, which may impair the function of the aspherical surfaces.

In such a case, like a scanning target surface 8a of Fig. 7B, lens surface optical axes AX of minute convex lenses ML are inclined with respect to a reference plane of the scanning target surface 8a from the orthogonal direction.

In this manner, lens surface optical axes AX are brought parallel to the direction of incidence of the pixel-displaying beam LC or closer to a direction parallel to the direction of incidence.

It is to be noted that the reference plane of the scanning target surface 8a is a surface on which the minute convex lenses ML are arranged in an array.

In this manner, miniaturization of optical systems and improvement in light use efficiency are achieved, such that the "directions in which the pixel-displaying beam is diverged by the minute convex lenses" are made uniform.

The head-up display apparatus described above may be mounted to not only the above-mentioned automobiles but also various operable moving bodies such as trains, vessels, helicopters, and airplanes. For example, the windshield of a motorcycle may be the transmission reflection member.

In this case, the glass portion in front of the driver's seat may be a reflective surface.

Obviously, the head-up display apparatus may be implemented as an "image display apparatus for movie viewing."

As described above, the minute convex lenses of the minute convex lens structure diffuse the pixel-displaying beam. It is also conceivable that the beam is diffused in one direction out of the two directions of X and Y directions.

In such a case, "minute convex cylinder surfaces" are applicable as the lens surfaces of the minute convex lenses.

It has been known that the shape of the minute convex lenses is defined hexagonal, and that the array of the lenses is configured as a honeycomb array, in association with methods of manufacturing microlens arrays.

The above-described head-up display apparatus may be adopted for, for example, an on-vehicle device for automobiles. In this case, X direction is the "lateral direction as viewed from the driver's seat," and Y direction is the "vertical direction."

The reflective surface 10 in this case is the windshield of an automobile.

In this case, for example, a "navigation image" is displayable as the enlarged virtual image 12 frontward on the windshield, allowing the driver, who is the observer 11, to observe the image while sitting on the driver's seat with the eyes almost fixed to the windshield in front of him/her.

In such a case, as described earlier, the enlarged virtual image to be displayed is desirably a "laterally longer image as viewed from the driver;" in other words, an image to be formed on the microlenses and the enlarged virtual image are generally desirably image with a larger angle of view in X direction, i.e., laterally longer images.

It has been known that the minute convex lenses (microlenses) may have "aspherical" lens "surfaces."

The lens surfaces of the minute convex lenses may be provided in the form of a more typical aspherical surface, such that aberration correction is performed as well.

Aberration correction allows an "irregularity in intensity of diffusion" to be reduced.

Incidentally, it is known that in case where a microlens array of a periodical lens arrangement is used for a scanning target surface (e.g., a transmission type screen or a reflection type screen) of an optical instrument such as a head-up display apparatus, an interference pattern (interference fringes), such as a diffraction pattern due to diffracted beams mutually intensified in a specific direction or moire fringes, is seen on the microlens array. The visibility of images to be formed by the microlens array and virtual images lowers when such an interference pattern appears.

It is to be noted here that the "microlens array of a periodical lens arrangement" means a microlens array with vertex positions T of a plurality of microlenses, i.e., vertices of each two adjacent microlenses, arranged at a pitch (hereinafter also referred to as a lens pitch,) i.e., at intervals, that are periodical (e.g., constant.)

It is to be noted that a "vertex position of a microlens" means a position in XY plane of a vertex of the lens surface of the microlens. The "vertex of the lens surface of a microlens" means a point at which the lens surface of the microlens intersects the optical axis (parallel to Z axis herein.)

Specific examples of the periodically-arrayed lens array include, for example, one in which vertex positions of microlenses are coincident with central positions C of the microlenses, the vertex positions (central positions) of the microlenses are located at a constant pitch (lens pitch), and the microlenses have a constant lens diameter (lens size). The optical axes of the microlenses pass the central positions of the microlenses. In this case, the interference pattern is to be seen as a fringe pattern of a uniform direction and pitch of the fringes.

It is to be noted that a "central position" of a microlens means a position in XY plane of the center of the microlens.

For example, fringes in two, i.e., vertical and lateral, directions are seen on a periodically-arrayed lens array in which a plurality of microlenses is arranged such that the lens pitch is constant, which microlenses are rectangular in planar shape and have the same size. Further, for example, hexagonally symmetrical, three-directional fringes are seen on a periodically-arrayed lens array in which a plurality of microlenses is arranged such that the lens pitch is constant, which microlenses have a hexagonal honeycomb planar shape and have the same size

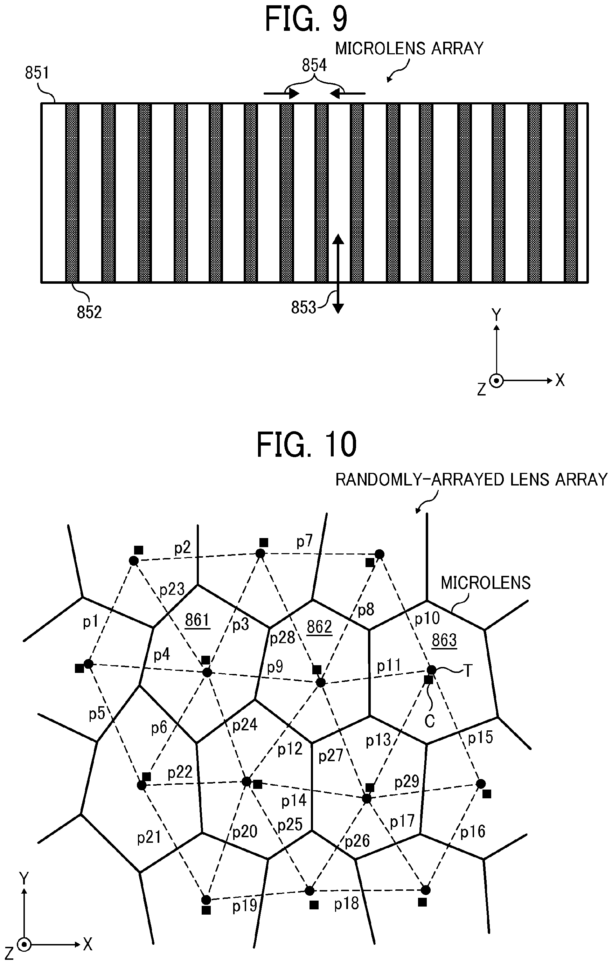

Fig. 9 is a schematic diagram of a case in which interference occurs in the horizontal direction of a periodically-arrayed lens array and a diffraction pattern is displayed as vertical fringes 851 and 852. This diffraction pattern is visible because of an even fringe direction 853 and pitch 854 in the plane.

To summarize the above discussion, use of a microlens array with a beam diameter of the lens diameter > the beam diameter suppresses interference of divergent beams from two adjacent microlenses. However, minute interference due to the widening range of beams still exists, and this minute interference is seen as highly visible interference fringes, since the fringe direction and pitch are uniform.

In order to reduce the interference fringes, the periodicity of the interference fringes be removed, and the visibility be lowered.

As described above, periodical interference fringes of a uniform pitch and direction are generated due to the periodicity of the lens arrangement with periodically-arrayed lens arrays. Thus, generation of interference fringes is suppressed by removing the periodicity of the lens arrangement from the microlens arrays, namely, randomizing (irregularizing) the lens pitch.

Fig. 10 depicts a microlens array of randomized lens pitches (hereinafter also referred to as a "randomly-arrayed lens array.") not according to the invention. This randomly-arrayed lens array has a structure based on a periodically-arrayed lens array having microlenses of which vertex positions are coincident with the central positions of the microlenses, and configured such that the optical axes of the microlenses of the periodically-arrayed lens array are shifted (offset) randomly in directions orthogonal to the optical axes, i.e., Z axis. In other words, the structure has irregular lens pitches. In this case, the optical axes of the microlenses pass the vertices of the microlenses but do not pass the centers of the microlenses. It is to be noted that the randomly-arrayed lens array depicted in Fig. 10 includes microlenses with the central positions C located at the center of a circumscribed circle of each of the microlenses or at the center of an inscribed circle of each of the microlenses.

For example, in a microlens array having randomized (irregularized) lens pitches and directions in which the lens boundaries extend (lens boundary directions) as depicted in Fig. 10, interference fringes to be generated between two adjacent microlenses 861 and 862 and between two adjacent microlenses 862 and 863 are different in direction and pitch, and thus are not seen as interference fringes of a macroscopically uniform direction and pitch. In other words, generation of interference fringes is reduced by the randomizing of the lens pitches, and the intensity of interference of divergent beams from two adjacent microlenses (hereinafter also referred to as "adjacent divergent beams") is dispersed by the randomizing of the lens boundary directions.

In the randomly-arrayed lens array depicted in Fig. 10, for example, lens pitches p1 to p29 may be different from each other; alternatively, a portion of the lens pitches may be the same and the rest may be different. In short, the lens pitches are irregular. It is to be noted that the black circles in Fig. 10 denote the vertex positions T of the microlenses. The black squares in Fig. 10 denote the central positions C of the microlenses.

Especially, the lens pitches in the directions in which the lenses are arranged, such as (...p4, p9, p11...), (...p23, p24, p25...), (...p8, p12, p20...), are desirably irregular (not periodical.)

Description is given below of the randomization of lens pitches and lens boundary directions.

First described is that the microlens array of the present embodiment is different from a typical diffuser for use for reducing speckle noise. The typical diffuser has multiple irregularities of different sizes formed on the surface, and an irregularity that is extremely smaller than, for example, a beam diameter intensifies interference between reflection beams at the portion, resulting in interference fringes.

According to the present embodiment, a randomly-arrayed lens array is proposed which has a lens diameter (lens size) that is larger than a predetermined value over the entire surface.

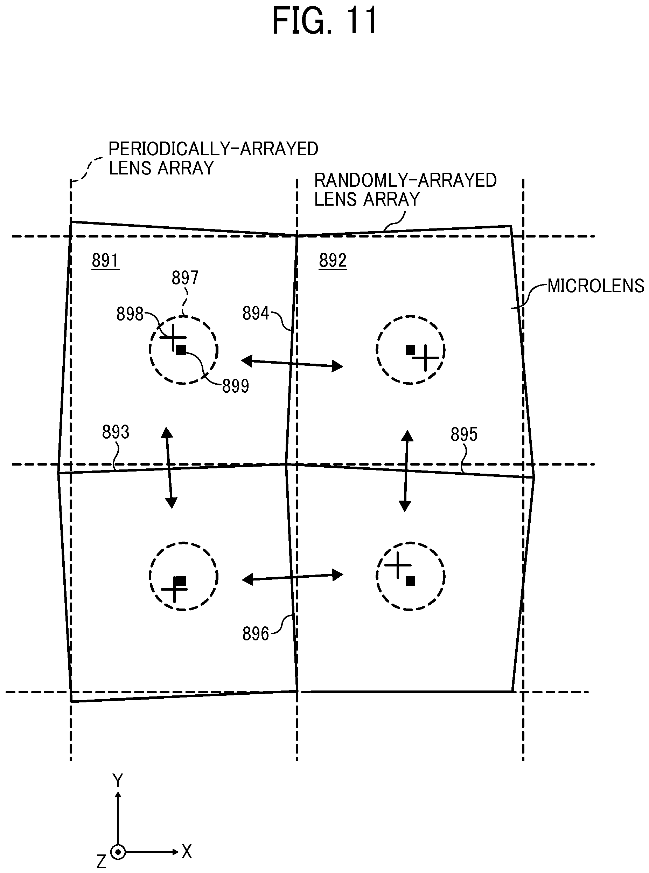

This randomly-arrayed lens array has a structure based on a periodically-arrayed lens array that is exemplarily depicted in Fig. 11 with the lattice-shaped broken lines and has a plurality of square-shaped microlenses arranged at a constant lens pitch.

In this periodically-arrayed lens array, the central position of each of the microlenses is a lattice point 899 (virtual point) of a square lattice. In addition, in the periodically-arrayed lens array, the vertex positions of the microlenses are coincident with the lattice points 899, which are the central positions of the microlenses.

Further, the microlenses of the periodically-arrayed lens array have a lens diameter set larger than an incident beam diameter, i.e., to a lens diameter not smaller than the above-mentioned predetermined value, so as to suppress interference of divergent beams from two adjacent microlenses (also referred to as adjacent divergent beams.)

The randomly-arrayed lens array has a structure in which the vertex position of each microlens of the periodically-arrayed lens array is displaced (made eccentric), i.e., is shifted from the central position in a virtual region 897 (the region enclosed with the circular broken line) including the central position (the lattice point 899) of the microlens. More specifically, the vertex positions of the microlenses are eccentric in the randomly-arrayed lens array.

In other words, the plurality of microlenses of the randomly-arrayed lens array is arranged individually on a plurality of lattice points 899 arranged at a constant pitch, and the vertex position of each of the microlenses deviates from the lattice point 899 at which the microlens is positioned.

Meanwhile, the plurality of microlenses of the periodically-arrayed lens array is arranged individually on a plurality of lattice points arranged at a constant pitch, and the vertex position of each of the microlenses is coincident with the lattice point at which the microlens is positioned.

Further, in the randomly-arrayed lens array, the vertex positions of the plurality of microlenses deviate irregularly from the central positions of the microlenses, with the result that the lens pitches are irregular.

Further, the lens boundary directions of the randomly-arrayed lens array (the directions denoted by solid lines 893, 894, 895, and 896 in Fig. 11) deviate randomly (irregularly) from the lens boundary directions of the periodically-arrayed lens array (the directions denoted by the lattice lines (broken lines) in Fig. 11.)

In this case, interference fringes appear in directions different from each other among the micro lenses. As a result, the directions of the interference fringes are not uniform macroscopically, thus lowering the degree of visibility of the interference fringes.

In the randomly-arrayed lens array thus configured, the lens diameters (lens sizes) are maintained approximately constant. Thus, incident beams are prevented from spreading out from the lenses, and interference of divergent beams from two adjacent microlenses is suppressed. Further, since the lens pitches are random, the intensity of interference is reduced, and generation of interference fringes is suppressed. Further, since the lens boundary directions are random, the orientations of the interference fringes to be generated are randomized. As a result, the visibility of interference fringes is significantly lowered. Thus, improvement is achieved in visibility of images (optical images) to be formed by the randomly-arrayed lens array.

It is to be noted here that in case where a micro lens array is scanned with laser light, a micro lens array including vertically long microlenses is desirably used. More specifically, since the effective cross section of laser light from a laser diode (LD) is typically oval and is not circular, when the lens diameter (lens size) is decided according to the incident beam diameter < the microlens diameter as discussed earlier, an aspect ratio that is adjusted to the shape (the oval shape) of the effective cross section of the laser light (e.g., vertically long) is desirably chosen. This allows for suppression of speckle noise and interference fringes with a minimum lens diameter. It is to be noted that the "effective cross section" means a portion of a cross section of the laser light of which the relative intensity is 20% to 80%.

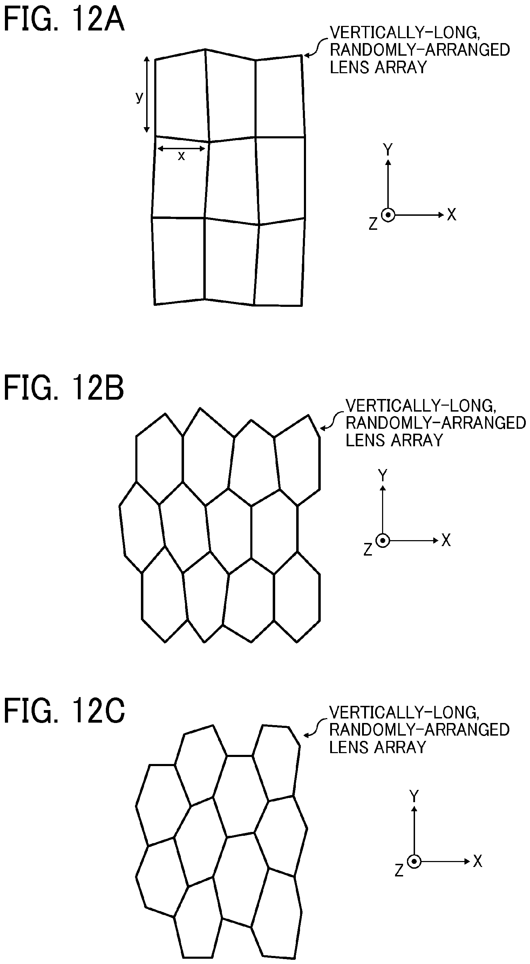

Figs. 12A to 12C depict specific examples of the randomly-arrayed lens array including vertically long microlenses (hereinafter also referred to as a vertically long, randomly-arrayed lens array.)

The vertically long, randomly-arrayed lens array depicted in Fig. 12A has a structure based on a periodically-arrayed lens array in which a plurality of rectangular microlenses is arranged in a matrix. Each microlens of this periodically-arrayed lens array has a vertically long aspect ratio, and y > x is established.

The vertically long, randomly-arrayed lens array depicted in Fig. 12B has a structure based on a periodically-arrayed lens array in which a plurality of vertically long hexagonal microlenses is arranged in a zigzag pattern.

The vertically long, randomly-arrayed lens array depicted in Fig. 12C has a structure based on a periodically-arrayed lens array in which a plurality of vertically long hexagonal microlenses is arranged in an armchair pattern.

In the vertically long, randomly-arrayed lens arrays depicted in Figs. 12A to 12C also, the lens pitches and lens boundary directions are randomized, and generation of interference fringes of a uniform pitch is suppressed.

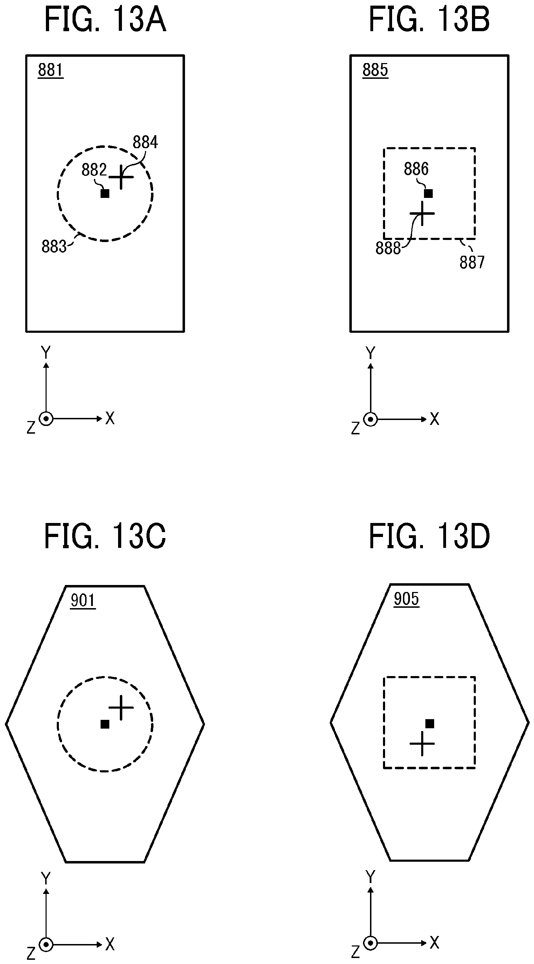

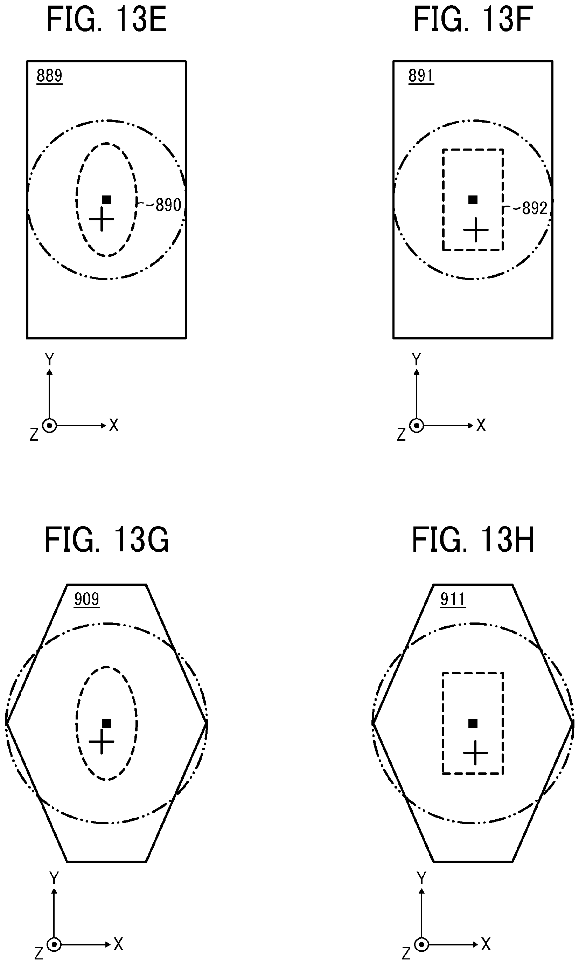

Figs. 13A to 13D depict the respective vertically long, randomly-arrayed lens arrays of Comparative Examples 1 to 4. Figs. 13E to 13H depict the respective vertically long, randomly-arrayed lens arrays of Examples 1 to 4. In Figs. 13A to 13H, the "broken lines" denote virtual boundaries, the "blackened tiny squares" denote the central positions of microlenses, and the positive signs denote the vertex positions of the microlenses.

In the vertically long, randomly-arrayed lens array of Comparative Example 1 depicted in Fig. 13A, a vertically long, rectangular microlens 881 has a vertex position 884 set at a point randomly chosen at an equal probability in a circular virtual boundary 883 defined equidistantly from a central position 882 of the microlens 881. More specifically, each microlens has a vertex position 884 made randomly eccentric in the virtual boundary 883. In this case, the vertex positions of the microlenses may be each dispersed with a maximum value defined for the amounts of deviation from the central positions 882. In the following description, the regions within the virtual boundaries (virtual regions) are also referred to as "eccentric regions."

In the vertically long, randomly-arrayed lens array of Comparative Example 2 depicted in Fig. 13B, a square-shaped virtual boundary 887 is defined. In this case also, the vertex positions may be dispersed with a maximum value defined for the amount of deviation of a vertex position 888 from a central position 886 of each vertically long, rectangular microlens.

However, in Comparative Examples 1 and 2, since consideration is not taken of the microlenses being vertically long, the probability is higher that the microlenses have a larger lateral relative random eccentricity (hereinafter also referred to as a lateral random eccentricity ratio) with respect to the length in the lateral direction of each microlens than a vertical random eccentricity (hereinafter referred to as a vertical random eccentricity ratio) with respect to the length in the vertical direction of each microlens. In this case, random eccentric effects vary between the vertical direction and the lateral direction.

It is to be noted here that the effect of reducing interference fringes is greater as the random eccentricity ratio is larger; however, when the microlens array is seen, the surface thereof comes to have a granular feeling similar to that of a diffuser due to the increased random eccentricity ratio, which looks rough. For this reason, the granular feeling is desirably controlled by appropriately controlling random eccentricity ratios in the vertical and lateral directions. It is to be noted that in case where, for example, the random eccentricities are the same in the vertical direction and in the lateral direction, the lateral random eccentricity ratio is larger than the vertical random eccentricity ratio.

Thus, in Examples 1 and 2 depicted in Figs. 13E and 13F, respectively, vertically long virtual boundaries 890 and 892, i.e., vertically long eccentric regions (hereinafter also referred to as vertically long eccentric regions), are defined for vertically long microlenses 889 and 891. In this case, the random eccentricities are independently controlled with respect to the vertical direction and the lateral direction.

In the vertically long, randomly-arrayed lens arrays, the vertex positions of microlenses are chosen at an equal probability within vertically long eccentric regions, i.e., are made randomly eccentric. As a result, a sum total of the eccentricities, i.e., the amounts of deviation from the central positions, in Y direction of the vertex positions of the microlenses is larger than a sum total of the eccentricities, i.e., the amounts of deviation from the central positions, in X direction of the vertex positions of the microlenses. In this case, the "sum total" may be substituted with an "average." This "average" may be an "arithmetic mean" or may be a "geometric mean."

More specifically, in the vertically long, randomly-arrayed lens arrays, microlenses having eccentricities of vertex positions larger in Y direction than in X direction is greater in number than microlenses (the number including zero) having eccentricities of vertex positions larger in X direction than in Y direction.

Further, in the vertically long, randomly-arrayed lens arrays, the maximum value for the amount of deviation in Y direction is desirably less than half the length in Y direction of each microlens, and also the maximum value for the amount of deviation in X direction is desirably less than half the length in X direction of each microlens.

Moreover, the length of each vertically long eccentric region in Y direction (vertical direction) is desirably set to or less than, for example, 4/5 of the length in Y direction of each microlens, and also the length of each vertically long eccentric region in X direction (lateral direction) is desirably set to or less than, for example, 4/5 of the length in X direction of each microlens. This is because a granular feeling is enhanced when the vertically long eccentric regions are too large for the microlenses, as described above.

Further, the size of each vertically long eccentric region may be set in accordance to the curvature (angle of divergence) of each microlens. Specifically, the size of each vertically long eccentric region may be larger as the curvature (angle of divergence) of the microlens is larger.

Further, the vertically long eccentric regions desirably do not spread out from the microlenses. More specifically, the length in Y direction of each vertically long eccentric region is desirably less than the length in Y direction of each microlens, and also the length of in X direction of each vertically long eccentric region is desirably less than the length in X direction of each microlens.

Further, the area of each vertically long eccentric region is desirably the same or less than the area of a regular n-sided polygon (n is an integer of three or larger) that circumscribes a circle (see the alternate long and short dashed line in Figs. 13E to 13H) of a diameter equal to a maximum length of lengths in X direction of the vertically long microlenses. In other words, the area of each vertically long eccentric region is desirably the same or less than the area of the largest eccentric region in a regular n-sided polygonal shape (n is an integer of three or larger) that is settable in each vertically long microlens. It is to be noted that the regular n-sided polygon is typified by a square and a regular hexagon.

In this case, the areas of the vertically long eccentric regions work in suppressing the lateral random eccentricities and in suppressing enhancement of a granular feeling as compared to eccentric regions in a regular n-sided polygonal shape (n is an integer of three or larger) having the same areas as the vertically long eccentric regions.

Moreover, the area of each vertically long eccentric region is desirably the same or less than the area of a circle that has a diameter equal to the largest length of lengths in X direction of the vertically long microlenses. In other words, the area of each vertically long eccentric region is desirably the same or less than the area of the largest circular eccentric region settable in the vertically long microlenses. In this case, the lateral random eccentricities are reduced and enhancement of a granular feeling is suppressed as compared to a circular eccentric region having the same area as that of the vertically long eccentric regions. It is to be noted that in this case, the areas of the vertically long eccentric regions are obviously the same or less than the area of the largest eccentric region in a regular n-sided polygonal shape (n is an integer of three or larger) settable in the vertically long microlenses.

Further, the aspect ratio of each vertically long eccentric region is normally desirably set based on the aspect ratio of each microlens (the vertically long microlenses here) so as to adjust the vertical and lateral random eccentricity ratios to appropriate values.

More specifically, ratio ly/lx of length ly in Y direction and length lx in X direction of each vertically long eccentric region is desirably set based on ratio Ly/Lx of length Ly in Y direction and length Lx in X direction of each microlens. Specifically, ly/lx may be equal to Ly/Lx; alternatively, ly/lx may be slightly larger or slightly smaller than Lx/Ly.

In this case, the lateral random eccentricities are regulated as compared to the vertical random eccentricities, and a granular feeling and roughness of the surface are suppressed when observation is made over the micro lens array.

Specific examples of the virtual boundaries (eccentric regions) include, for example, the vertically long oval shape of Example 1 depicted in Fig. 13E and the vertically long rectangular shape of Example 2 depicted in Fig. 13F; however, the same effects are expected with other shapes insofar as the shape is vertically long.

It is to be noted that in Comparative Examples 1 and 2 and Examples 1 and 2, vertically long, rectangular micro lenses are exemplarily described; however, the same discussion stands true for, for example, vertically long hexagonal micro lenses 901 and 905 of Comparative Examples 3 and 4 as depicted in Figs. 13C and 13D, respectively, as well as vertically long hexagonal micro lenses 909 and 911 of Examples 3 and 4 as depicted in Figs. 13G and 13H, respectively.

As compared to Comparative Examples 3 and 4, in Examples 3 and 4, the lateral random eccentricities are reduced more than the vertical random eccentricities, and a granular feeling and roughness are suppressed.

Further, in Comparative Examples 3 and 4, the lateral shapes are increasingly changed from the basic periodically-arrayed lens array including a plurality of vertically long hexagonal microlenses, due to the randomly eccentric state. Meanwhile, in Examples 3 and 4, change in shape is suppressed with respect to the basic periodically-arrayed lens array.

It is to be noted that the vertically long eccentric regions (virtual regions) are not limited to the vertically long oval shape and the vertically long rectangular shape but may be another vertically long shape. In any case, the random eccentricities and the intensity of interference are adjustable in accordance with the intensity of interference of adjacent divergent beams. Further, the distribution of probabilities within the vertically long eccentric regions may be given variety. For example, the distribution density of vertex positions within the vertically long eccentric regions may be locally higher or lower.

The micro lens array (vertically long, randomly-arrayed lens array) according to the present embodiment described above is, from a first aspect, a lens array having a plurality of microlenses individually arranged on a plurality of lattice points (virtual points) of a periodical (regular) pitch. The microlenses are each longer in Y direction than in X direction orthogonal to Y direction. Each of the microlenses has a vertex position off from the lattice point at which the microlens is positioned. A sum total of the amounts of deviation in Y direction of the vertex positions from the lattice points is larger than a sum total of the amounts of deviation in X direction.

Further, the microlens array (vertically long, randomly-arrayed lens array) according to the present embodiment is, from a second aspect, a lens array including a plurality of microlenses with central positions (lattice points) located at a periodical (regular) pitch. The microlenses are each longer in Y direction than in X direction orthogonal to Y direction. Each of the microlenses has a vertex position off from the central position of the lens. A sum total of the amounts of deviation in Y direction of the vertex positions from the central positions is larger than a sum total of the amounts of deviation in X direction.

Further, the microlens array (vertically long, randomly-arrayed lens array) according to the present embodiment is, from a third aspect, a lens array having a plurality of microlenses individually arranged on a plurality of lattice points (virtual points) of a periodical (regular) pitch. The microlenses are each longer in Y direction than in X direction orthogonal to Y direction. Each of the microlenses has a vertex position off from the lattice point on which the microlens is positioned, and the vertex position is located within a vertically long eccentric region (virtual region) that is longer in Y direction than in X direction with respect to the lattice point.

Further, the microlens array (vertically long, randomly-arrayed lens array) according to the present embodiment is, from a fourth aspect, a lens array including a plurality of microlenses having central positions (lattice points) located at a periodical (regular) pitch. The microlenses each longer in Y direction than in X direction orthogonal to Y direction. Each of the microlenses has a vertex position off from the central position of the lens, and the vertex position is located within a vertically long eccentric region (virtual region) that is longer in Y direction than in X direction with respect to the central position.

In the microlens arrays of the present embodiment thus configured, the amounts of deviation in Y direction and X direction of the vertex position of each microlens from the corresponding lattice point (central position) are appropriately controlled regardless of the ratio of the length in Y direction and the length in X direction of the microlens. In addition, interference fringes are prevented from being generated on the microlens arrays, and enhancement of a granular feeling is suppressed.

As a result, the visibility of images (optical images) to be formed by the microlens arrays is improved regardless of the shapes of the microlenses.

It is to be noted that in the microlens arrays (vertically long, randomly-arrayed lens arrays) of the present embodiment, the same effects are obtained with a microlens having a length Ly in Y direction very slightly longer than a length Lx in X direction, i.e., virtually Ly ≈ Lx. In other words, for example, the randomly-arrayed lens array depicted in Fig. 10 may be regarded as a vertically long, randomly-arrayed lens array.

Further, it may be said that the vertically long, randomly-arrayed lens arrays according to first to third aspects have a structure that is or is not based on a periodically-arrayed lens array.

According to the present embodiment, a vertically long eccentric region is defined with respect to each of the vertically long micro lenses of a periodically-arrayed lens array, and the vertex position of the microlens is randomly made eccentric within the vertically long eccentric region. Thus, the random eccentricities are adjusted independently in the vertical direction and in the lateral direction. A granular feeling on the microlens array to be brought about by the randomly eccentric state is reduced by relatively decreasing the lateral random eccentricities as compared to the vertical random eccentricities.

Further, the microlens arrays according to the present embodiment are usable as the above-described scanning target surface of a head-up display apparatus. In this case, higher quality images (virtual images) are displayed.

It is to be noted that in the foregoing embodiments, the lens boundary directions of the vertically long, randomly-arrayed lens arrays are random; however, the lens boundary directions may be periodical. More specifically, the vertex positions of the microlenses may be the ones randomly off from the corresponding lattice points (the central positions of the microlenses) in the vertically long, randomly-arrayed lens arrays.

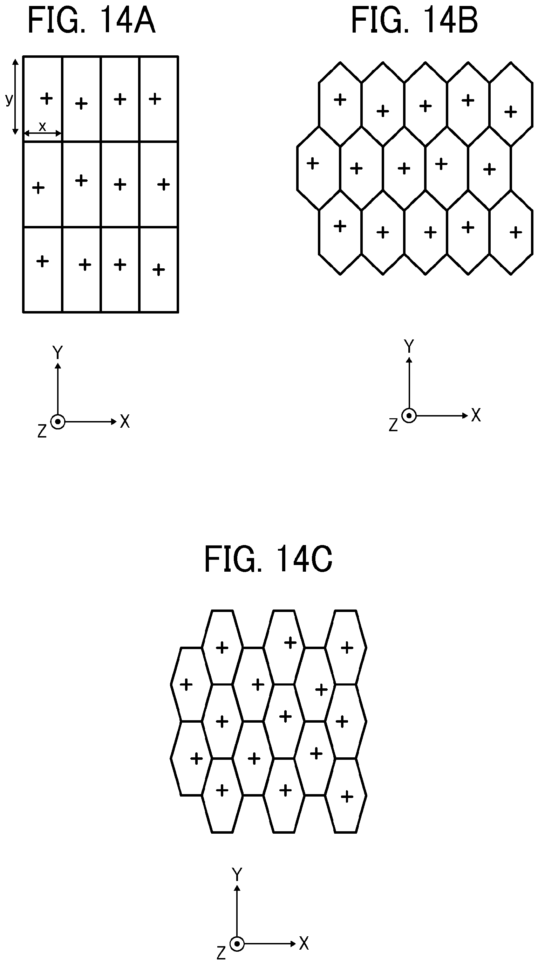

For example, in Figs. 14A to 14E, vertically long, randomly-arrayed lens arrays are depicted in which the lens boundary directions of Examples 5 to 9 are periodical and the central positions of the microlenses are located at a periodical pitch. In Figs. 14A to 14E, the positive signs denote the vertex positions of the lenses.

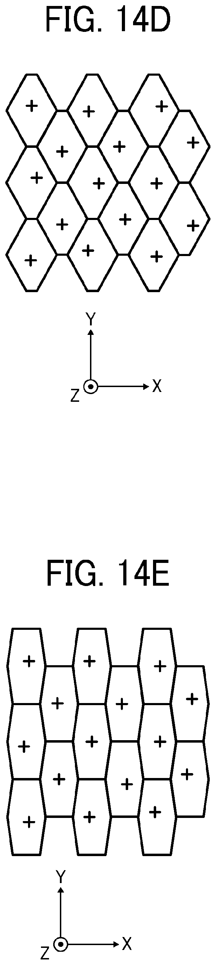

A vertically long, randomly-arrayed lens array of Example 5 depicted in Fig. 14A is a vertically long, rectangular array, and y > x is established. A vertically long, randomly-arrayed lens array of Example 6 depicted in Fig. 14B is a vertically long, hexagonal zigzag array. A vertically long, randomly-arrayed lens array of Example 7 depicted in Fig. 14C is a vertically long, hexagonal armchair array. A vertically long, randomly-arrayed lens array of Example 8 depicted in Fig. 14D has structures in a rhomboid shape with shorter up-down sides and longer diagonal sides. A vertically long, randomly-arrayed lens array of Example 9 depicted in Fig. 14E has structures in an approximately rectangular shape with longer up-down sides and shorter diagonal sides.

In the vertically long, randomly-arrayed lens arrays of Examples 5 to 9 also, the vertex positions are randomly made eccentric, and thus generation of interference fringes of a uniform pitch is suppressed.

Further, in Examples 5 to 9, the shape of the microlenses may be matched to, for example, the spot shape, i.e., the effective cross-sectional shape, of incident beams so as to suppress spreading of beams out of the microlenses, thus lowering the intensity of interference fringes itself.

As can be seen from the foregoing description, generation of interference fringes of a uniform pitch is suppressed by making the vertex positions randomly eccentric in any periodically-arrayed lens array.

It is to be noted that in the foregoing embodiments, description is given of a constant lens pitch as an example of the periodicity of the lens pitch. The present disclosure is not limited thereto, and it may be said that a lens pitch is periodical when the lens pitch exhibits an arithmetically progressing change or a geometrically progressing change in the directions in which the lenses are arranged. It may be also said that a lens pitch is periodical when a plurality of repetitive units exist, by which the lens pitch arithmetically or geometrically changes in the directions in which the lenses are arranged.

Further, description is given in the foregoing embodiments of a case in which the lens pitch is periodical in a periodically-arrayed lens array. In short, the lens pitch of the periodically-arrayed lens array is regular in some respect. Specifically, a plurality of repetitive units may exist, by which the lens pitch exhibits an arithmetically or geometrically progressing change in the directions in which the lenses are arranged.

Further, in the foregoing embodiments, the vertically long, randomly-arrayed lens arrays are placed such that the longitudinal direction of the vertically long microlens arrays is Y direction (vertical direction) and the shorter-side direction is X direction (lateral direction). The present disclosure is not limited thereto, and, for example, the placement may be appropriately altered according to, for example, the layout of optical systems.

Further, in the foregoing embodiments, a point in a vertically long eccentric region is chosen randomly (at random) as the vertex position of each microlens. In short, the vertex position of each microlens is off (eccentric) randomly (irregularly) from the corresponding lattice point (the central position of the microlens.) In other words, either the "amount of deviation" or the "direction of deviation" is random with respect to the deviation. That is, the amount of deviation may be random, or the direction of deviation may be random, or both the amount of deviation and direction of deviation may be random.

Further, in the foregoing embodiments, in deciding the vertex position of each microlens of the vertically long, randomly-arrayed lens arrays, a vertically long eccentric region is set, and one point in the vertically long eccentric region is extracted at random. The present disclosure is however not limiter thereto, and in short, a point is selected such that a sum total of the amounts of deviation in Y direction of the vertex positions of the microlenses from the corresponding lattice points is larger than a sum total of the amounts of deviation in X direction. In other words, setting a vertically long eccentric region is optional.

Further, in the foregoing embodiments, the vertex positions of the microlenses of the vertically long, randomly-arrayed lenses are randomly off from the corresponding lattice points. The present disclosure is however not limited thereto. In short, the lens pitch, i.e., the intervals between vertices, is irregular, and the vertex position of at least one of the microlenses is off from the corresponding lattice point. For example, the vertex positions of a portion of microlenses may be off from the corresponding lattice points, and the vertex positions of the remaining microlenses may be coincident with the corresponding lattice points.

Further, in the foregoing embodiments, one point within the vertically long eccentric region is randomly chosen as the vertex position of each microlens of the vertically long, randomly-arrayed lens arrays. Alternatively, for example, the chosen point may be a point at which the eccentricity, i.e., the amount of deviation, in Y direction is larger than the eccentricity, i.e., the amount of deviation, in X direction within the vertically long eccentric region. In this case, the point may be chosen within the vertically long eccentric region or may be chosen without defining the vertically long eccentric region. In either case, a sum total of the eccentricities in Y direction of the vertex positions of the microlenses is larger than a sum total of the eccentricities in X direction.

It is to be noted that in the foregoing embodiments, the sum total of the eccentricities in Y direction (the former) of the vertex positions of the microlenses is larger than the sum total of the eccentricities in X direction (the latter). This may be opposite, i.e., the latter may be larger than the former. Alternatively, the former and the latter may be the same. In short, the vertex position of each microlens is located within the vertically long eccentric region set in the microlens, and the vertex position of at least one of the microlenses is desirably made eccentric randomly within the vertically long eccentric region.

Further, in the foregoing embodiments, a plurality of microlenses is adjacent to each other in the vertically long, randomly-arrayed lens arrays. The present disclosure is however not limited thereto, and the microlenses may be separate from each other. For example, a region between two adjacent microlenses may be set as a non-lens region.

Further, in the foregoing embodiments, exemplary shapes of the microlenses of the vertically long, randomly-arrayed lens arrays are rectangular and hexagonal. The shapes are however not limited thereto. In short, the shapes are desirably n-sided polygonal (n is an integer of three or larger,) or may be oval. In these cases also, the lens boundary directions are desirably random.

Further, in the foregoing embodiments, the optical axes of the microlenses of the vertically long, randomly-arrayed lens arrays are offset in a direction orthogonal to Z axis, so as to shift the vertex positions of the microlenses from the central positions. Instead of this, the optical axes of the microlenses may be inclined with respect to Z axis, so as to shift the vertex positions, i.e., the positions in XY plane of vertices on the optical axes, of the microlenses from the central positions. In this case, the optical axis of each microlens may either pass or not pass the central position of the microlens.

Further, in the microlens arrays of the foregoing embodiments, a plurality of microlenses is arranged two-dimensionally. In place of this configuration, the microlenses may be arranged one-dimensionally or three-dimensionally.

Further, in the foregoing embodiments, a two-dimensional deflector (scanner) is used to scan the microlens arrays two-dimensionally, so as to form a two-dimensional image. Alternatively, for example, a one-dimensional deflector including a micro electronic mechanical system (MEMS) mirror, a galvanometer-driven mirror, and a polygon mirror may be used to perform one-dimensional scan, so as to form a one-dimensional image.

Further, in the foregoing embodiments, color images are formed, but monochrome images may be formed instead.

Further, the transmission reflection member serving as the reflective surface 10 may, for example, include a member other than the windshield of a moving body, like a so-called combiner, and may be positioned in front of the windshield as viewed from the observer.

Further, the transmission reflection member is not limited to the windshield of a moving body and may also be, for example, a side glass or a rear glass. In short, the transmission reflection member may be a window member that is disposed in a moving body to be operated by an operator who sees the virtual image, and that allows the operator to see the outside of the moving body.

Further, the target audience to whom the virtual image is made visible by the image display apparatus is not limited to the operator of a moving body and may also be, for example, a navigator or a passenger boarding the moving body.

Further, the image display apparatus according to embodiments of the present invention are applicable not only to head-up display apparatuses to be installed in moving bodies but also, for example, to head-mount displays mountable on the head of the observer, as well as projectors.

In other words, embodiments of the present invention are applicable generally to image display apparatuses including a microlens array to be irradiated with laser light.

According to embodiments of the present invention, the visibility of optical images to be formed by the lens array is improved, regardless of the shape of the lenses.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

**Claims**

1. A lens array (8), comprising:

   a plurality of lenses each centred individually on a plurality of virtual points, the virtual points being arranged in two dimensions at a pitch having a regularity, wherein
   each of the lenses has a length in a first direction and a length in a second direction orthogonal to the first direction, the length in the first direction being longer than the length in the second direction,
   **characterized in that** a plurality of lenses have a vertex position randomly deviating in two directions from the virtual point having the lens arranged thereon, and
   the vertex position deviates from the virtual point in such a manner that an average deviation in the first direction is larger than an average deviation in the second direction.

2. The lens array (8) according to claim 1, wherein the amount of deviation in the first direction has a maximum value less than half the length in the first direction of the lens, and
   the amount of deviation in the second direction has a maximum value less than half the length in the second direction of the lens.

3. The lens array (8) according to claim 2, wherein the vertex position of each of the lenses is located in a virtual region having a length in the first direction and a length in the second direction, the length in the first direction being longer than the length in the second direction, the virtual region having an area equal to or smaller than an area of a circle having the length in the second direction of the lens as a diameter.

4. The lens array (8) according to claim 3, wherein the length in the first direction and the length in the second direction of the virtual region is at a ratio set based on a ratio of the length in the first direction and the length in the second direction of the lens.

5. The lens array (8) according to claim 1, wherein , the vertex position of each of the lenses is located in a virtual region centered at the virtual point having the lens arranged thereon, the virtual region having a length in the first direction and a length in the second direction, the length in the first direction being longer than the length in the second direction.

6. The lens array (8) according to claim 1, wherein the vertex position of each of the lenses is located in a virtual region centered at the central position of the lens, the virtual region having a length in the first direction and a length in the second direction, the length in the first direction being longer than the length in the second direction.

7. The lens array (8) according to claim 5 or 6, wherein the length of the virtual region in the first direction is less than the length in the first direction of the lens, and
   the length of the virtual region in the second direction is less than the length in the second direction of the lens.

8. The lens array (8) according to claim 7, wherein the virtual region has an area equal to or smaller than an area of a circle having the length in the second direction of the lens as a diameter.

9. The lens array (8) according to claim 7 or 8, wherein the length in the first direction and the length in the second direction of the virtual region is at a ratio set based on a ratio of the length in the first direction and the length in the second direction of the lens.

10. The lens array (8) according to any one of claims 1 to 9, wherein the vertex positions of the lenses are located at an irregular pitch.

11. The lens array (8) according to any one of claims 1 to 10, wherein
    the lenses each have an n-sided polygonal planar shape, where N is an integer equal to or larger than three, and
    two lenses of the lenses are adjacent to each other in a boundary direction extending irregularly.

12. The lens array (8) according to any one of claims 1 to 11, wherein
the lenses are configured to be irradiated with laser light, and
the lenses are each larger than an effective cross section of the laser light to be applied thereto.

13. An image display apparatus (1000), comprising the lens array (8) of any one of claims 1 to 12, the image display apparatus being configured to form an image by irradiating the lens array (8) with laser light.

14. A moving body, comprising:

the image display apparatus of (1000) claim 13; and
a transmission reflection member (10) provided on an optical path of laser light emitted from a light source (100) via the lens array (8).

**Patentansprüche**

1. Linsenanordnung (8), umfassend:

eine Vielzahl von Linsen, von denen jede individuell auf einer Vielzahl von virtuellen Punkten zentriert ist, wobei die virtuellen Punkte in zwei Dimensionen in einem Abstand mit einer Regelmäßigkeit angeordnet sind, wobei
jede der Linsen eine Länge in eine erste Richtung und eine Länge in eine zweite Richtung orthogonal zur ersten Richtung hat, wobei die Länge in die erste Richtung länger ist als die Länge in die zweite Richtung,
**dadurch gekennzeichnet, dass** eine Vielzahl von Linsen eine Scheitelpunktposition hat, die beliebig in zwei Richtungen vom virtuellen Punkt mit der darauf angeordneten Linse abweichen, und wobei die Scheitelpunkposition vom virtuellen Punkt in einer derartigen Weise abwicht, dass eine durchschnittliche Abweichung in die erste Richtung höher ist als eine durchschnittliche Abweichung in die zweite Richtung.

2. Linsenanordnung (8) nach Anspruch 1, wobei das Ausmaß der Abweichung in die erste Richtung einen maximalen Wert hat, der geringer ist als die Hälfte der Länge in die erste Richtung der Linse, und das Ausmaß der Abweichung in die zweite Richtung einen maximalen Wert hat, der geringer ist als die Hälfte der Länge in die zweite Richtung der Linse.

3. Linsenanordnung (8) nach Anspruch 2, wobei sich die Scheitelpunktposition jeder der Linsen in einem virtuellen Bereich mit einer Länge in die erste Richtung und einer Länge in die zweite Richtung befindet, wobei die Länge in die erste Richtung länger ist als die Länge in die zweite Richtung, wobei der virtuelle Bereich einen Bereich aufweist, der gleich oder kleiner ist als ein Bereich eines Kreises mit der Länge in die zweite Richtung der Linse als Durchmesser.

4. Linsenanordnung (8) nach Anspruch 3, wobei sich die Länge in die erste Richtung und die Länge in die zweite Richtung des virtuellen Bereichs in einem Verhältnis befinden, das eingestellt wird beruhend auf einem Verhältnis der Länge in die erste Richtung und der Länge in die zweite Richtung der Linse.

5. Linsenanordnung (8) nach Anspruch 1, wobei sich die Scheitelpunktposition jeder der Linsen in einem virtuellen Bereich befindet, der am virtuellen Punkt mit der darauf angeordneten Linse zentriert ist, wobei der virtuelle Bereich eine Länge in die erste Richtung und eine Länge in die zweite Richtung aufweist, wobei die Länge in die erste Richtung länger ist als die Länge in die zweite Richtung.

6. Linsenanordnung (8) nach Anspruch 1, wobei sich die Scheitelpunktposition jeder der Linsen in einem virtuellen Bereich befindet, der an der Mittenposition der Linse zentriert ist, wobei der virtuelle Bereich eine Länge in die erste Richtung und eine Länge in die zweite Richtung aufweist, wobei die Länge in die erste Richtung länger ist als die Länge in die zweite Richtung.

7. Linsenanordnung (8) nach Anspruch 5 oder 6, wobei die Länge des virtuellen Bereichs in die erste Richtung geringer ist als die Länge in die erste Richtung der Linse, und
die Länge des virtuellen Bereichs in die zweite Richtung geringer ist als die Länge in die zweite Richtung der Linse.

8. Linsenanordnung (8) nach Anspruch 7, wobei der virtuelle Bereich einen gleichen oder kleineren Bereich als einen Bereich eines Kreises mit der Länge in die zweite Richtung der Linse als Durchmesser aufweist.

9. Linsenanordnung (8) nach Anspruch 7 oder 8, wobei sich die Länge in die erste Richtung und die Länge in die zweite Richtung des virtuellen Bereichs in einem Verhältnis befinden, das eingestellt wird beruhend auf einem Verhältnis der Länge in die erste Richtung und die Länge in die zweite Richtung der Linse.

10. Linsenanordnung (8) nach Anspruch 1 bis 9, wobei sich die Scheitelpunktpositionen der Linsen in einem unregelmäßigen Abstand befinden.

11. Linsenanordnung (8) nach einem der Ansprüche 1 bis 10, wobei die Linsen jeweils eine n-seitige polygonale ebene Form aufweisen, wobei N eine ganze Zahl ist, die gleich oder größer drei ist, und zwei Linsen der Linsen in einer sich unregelmäßig erstreckenden Umfangsrichtung aneinander angrenzen.

**12.** Linsenanordnung (8) nach einem der Ansprüche 1 bis 11, wobei die Linsen konfiguriert sind, mit Laserlicht bestrahlt zu werden, und die Linsen jeweils größer sind als ein tatsächlicher Querschnitt des Laserlichts, das darauf angewendet werden soll.

**13.** Bildanzeigevorrichtung (1000), umfassend die Linsenanordnung (8) nach einem der Ansprüche 1 bis 12, wobei die Bildanzeigevorrichtung konfiguriert ist, ein Bild durch das Bestrahlen der Linsenanordnung (8) mit Laserlicht zu bilden.

**14.** Sich bewegender Körper, umfassend:

die Bildanzeigevorrichtung (1000) nach Anspruch 13; und
ein Übertragungsreflexionselement (10), bereitgestellt auf einem optischen Weg des von einer Lichtquelle (100) über die Linsenanordnung (8) abgegebenen Laserlichts.

**Revendications**

**1.** Réseau de lentilles (8), comprenant :

une pluralité de lentilles, chacune étant centrée individuellement sur une pluralité de points virtuels, les points virtuels étant disposés selon deux axes espacés d'une distance régulière, chacune des lentilles ayant une longueur dans une première direction et une longueur dans une deuxième direction perpendiculaire à la première direction, la longueur dans la première direction étant plus longue que la longueur dans la deuxième direction,
**caractérisé en ce qu'**une pluralité de lentilles présentent une position de sommet s'écartant de manière aléatoire dans deux directions à partir du point virtuel sur lequel la lentille est agencée, et la position de sommet s'écarte du point virtuel de manière à ce qu'une déviation moyenne dans la première direction soit plus grande qu'une déviation moyenne dans la deuxième direction.

**2.** Réseau de lentilles (8) selon la revendication 1, dans lequel
le degré d'écart dans la première direction a une valeur maximale inférieure à la moitié de la longueur dans la première direction de la lentille, et

le degré d'écart dans la deuxième direction a une valeur maximale inférieure à la moitié de la longueur dans la deuxième direction de la lentille.

**3.** Réseau de lentilles (8) selon la revendication 2, dans leque
la position de sommet de chacune des lentilles est située dans une région virtuelle présentant une longueur dans la première direction et une longueur dans la deuxième direction, la longueur dans la première direction étant plus longue que la longueur dans la deuxième direction, la région virtuelle présentant une aire égale ou inférieure à une aire d'un cercle dont la longueur dans la deuxième direction de la lentille représente un diamètre.

**4.** Réseau de lentilles (8) selon la revendication 3, dans lequel
la longueur dans la première direction et la longueur dans la deuxième direction de la région virtuelle sont dans un rapport établi en fonction d'un rapport entre la longueur dans la première direction et la longueur dans la deuxième direction de la lentille.

**5.** Réseau de lentilles (8) selon la revendication 1, dans lequel
la position de sommet de chacune des lentilles est située dans une région virtuelle centrée au niveau du point virtuel sur lequel la lentille est agencée, la région virtuelle présentant une longueur dans la première direction et une longueur dans la deuxième direction, la longueur dans la première direction étant plus longue que la longueur dans la deuxième direction.

**6.** Réseau de lentilles (8) selon la revendication 1, dans lequel
la position de sommet de chacune des lentilles est située dans une région virtuelle centrée au niveau de la position centrale de la lentille, la région virtuelle présentant une longueur dans la première direction et une longueur dans la deuxième direction, la longueur dans la première direction étant plus longue que la longueur dans la deuxième direction.

**7.** Réseau de lentilles (8) selon la revendication 5 ou 6, dans lequel
la longueur de la région virtuelle dans la première direction est inférieure à la longueur dans la première région de la lentille, et
la longueur de la région virtuelle dans la deuxième direction est inférieure à la longueur dans la deuxième direction de la lentille.

**8.** Réseau de lentilles (8) selon la revendication 7, dans lequel la région virtuelle présente une aire égale ou inférieure à une aire d'un cercle dont la longueur dans la deuxième direction de la lentille représente un diamètre.

9. Réseau de lentilles (8) selon la revendication 7 ou 8, dans lequel la longueur dans la première direction et la longueur dans la deuxième direction de la région virtuelle sont dans un rapport défini en fonction d'un rapport entre la longueur dans la première direction et la longueur dans la deuxième direction de la lentille.

10. Réseau de lentilles (8) selon l'une quelconque des revendications 1 à 9, dans lequel les positions de sommet des lentilles sont espacés de distances irrégulières.

11. Réseau de lentilles (8) selon l'une quelconque des revendications 1 à 10, dans lequel
les lentilles ont chacune une forme planaire polygonale à n côtés, où n est un nombre entier égal ou supérieur à trois, et
deux des lentilles sont adjacentes l'une à l'autre dans une direction limite s'étendant de manière irrégulière.

12. Réseau de lentilles (8) selon l'une quelconque des revendications 1 à 11, dans lequel
les lentilles sont conçues pour être irradiées par une lumière laser, et
les lentilles sont chacune plus grandes qu'une section transversale efficace de la lumière laser devant être appliquée sur celles-ci.

13. Appareil d'affichage d'image (1000), comprenant le réseau de lentilles (8) selon l'une quelconque des revendications 1 à 12, l'appareil d'affichage d'image étant conçu pour former une image par irradiation du réseau de lentilles (8) par une lumière laser.

14. Corps mobile, comprenant :

   un appareil d'affichage d'image (1000) selon la revendication 13 ; et
   élément à réflexion de transmission (10) pourvu sur un chemin optique de la lumière laser émise depuis une source lumineuse (100) par le biais du réseau de lentilles (8).

# FIG. 1A

# FIG. 1B

# FIG. 1C

# FIG. 2A

# FIG. 2B

# FIG. 3A

# FIG. 3B

# FIG. 3C

FIG. 4A

FIG. 4B

FIG. 4C

# FIG. 5A

# FIG. 5B

# FIG. 5C

# FIG. 5D

# FIG. 5E

# FIG. 6A

# FIG. 6B

# FIG. 7A

# FIG. 7B

# FIG. 8

# FIG. 9

MICROLENS ARRAY

851

854

852

853

Y

Z → X

# FIG. 10

RANDOMLY-ARRAYED LENS ARRAY

p2   p7

p23

p1   861   p3   p28   862   p8   p10   MICROLENS

p4   p9   863

p11   T

p5   C

p6   p24   p13   p15

p12   p27

p22   p29

p14

p21   p20   p25   p26   p17   p16

Y

Z → X

p19   p18

# FIG. 11

PERIODICALLY-ARRAYED
LENS ARRAY

RANDOMLY-ARRAYED
LENS ARRAY

891

892

897

898

894

MICROLENS

899

893

895

896

Y

Z ⊙ → X

## FIG. 12A

VERTICALLY-LONG,
RANDOMLY-ARRANGED
LENS ARRAY

## FIG. 12B

VERTICALLY-LONG,
RANDOMLY-ARRANGED
LENS ARRAY

## FIG. 12C

VERTICALLY-LONG,
RANDOMLY-ARRANGED
LENS ARRAY

EP 2 916 149 B1

# FIG. 13A

# FIG. 13B

# FIG. 13C

# FIG. 13D

34

# FIG. 13E

# FIG. 13F

# FIG. 13G

# FIG. 13H

# FIG. 14A

# FIG. 14B

# FIG. 14C

## FIG. 14D

## FIG. 14E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003004907 A
- WO 2013179649 A
- JP 2007173035 B
- US 2010328773 A
- JP 4200223 B
- JP 5010445 B